# EUROPEAN PATENT SPECIFICATION

(11) **EP 1 109 059 B1**
(45) Date of publication and mention of the grant of the patent: **15.10.2003**
(21) Application number: 00203956.8
(22) Date of filing: 10.11.2000
(51) Int. Cl.: G03C 1/83, B41M 5/40, B41C 1/10, C09B 23/00, C09B 23/08

(54) **Oxonol infrared radiation sensitive compounds**
Gegenüber Infrarotstrahlung empfindliche Oxonolverbindungen
Composés oxonols sensibles au rayonnement infrarouge

(30) Priority: 22.11.1999 US 444690; 08.06.2000 US 589964; 08.06.2000 US 589965
(43) Date of publication of application: 20.06.2001
(73) Proprietor: EASTMAN KODAK COMPANY, Rochester, New York 14650 (US)
(72) Inventor: Williams, Kevin W., c/o Eastman Kodak Company, Rochester, New York 14650-2201 (US); Zheng, Shiying, c/o Eastman Kodak Company, Rochester, New York 14650-2201 (US); Dominh, Thap, c/o Eastman Kodak Company, Rochester, New York 14650-2201 (US)
(74) Representative: Haile, Helen Cynthia

(56) References cited:
- US-A- 5 213 956
- US-A- 5 399 690
- US-B1- 6 174 652

## Description

This invention relates to novel compounds that are infrared radiation sensitive. More particularly, this invention relates to novel oxonol compounds that are sensitive at 700 nm or higher wavelengths in water or water-miscible organic solvents.

Particulate compounds that absorb at various wavelengths have been used in photographic silver halide materials for many years. For example, such compounds have been used as "filter" dyes to absorb electromagnetic radiation ("light") from different regions of the electromagnetic spectrum, such as red, blue, green, ultraviolet and infrared regions. These filter dyes are often required to perform the function of absorbing light during exposure of the material so as to prevent or at least inhibit light of a particular region of the spectrum from reaching at least one of the radiation-sensitive layers of the material.

Particulate filter dyes can be designed with various features to facilitate their use and/or immobilization in photographic materials, as described for example in US-A-5,213,956 (Diehl et al).

There is a need in the photographic industry for compounds that absorb in the near infrared and infrared regions of the electromagnetic spectrum for various purposes. Such materials can be used, for example, to absorb heat and to initiate or facilitate imaging in lithographic printing plates. However, such compounds (that is, IR dye sensitizers) must be compatible with other components of imaging formulations used in such printing plates.

Organic dye salts, by nature, are often partially soluble in water or alcoholic coating solvents and are thus preferred as IR dye sensitizers in lithographic plate imaging compositions. However, many such salts have been found to be unacceptable because of insufficient solubility, because they react with the charged polymer to form hydrophobic products that can result in scummed or toned images, or because they offer insufficient thermal sensitization in imaging members. In particular, there is a need to have IR dye sensitizers that are compatible with thiosulfate polymers.

We have discovered that certain oxonol compounds are useful infrared radiation absorbing compounds in lithographic printing plates and other imaging elements describes herein. These novel compounds are soluble in water or water-miscible organic solvents, absorb radiation and have a λₘₐₓ greater than 700 nm as measured in water or a water-miscible organic solvent. These compounds are also represented by Structure DYE shown as follows: 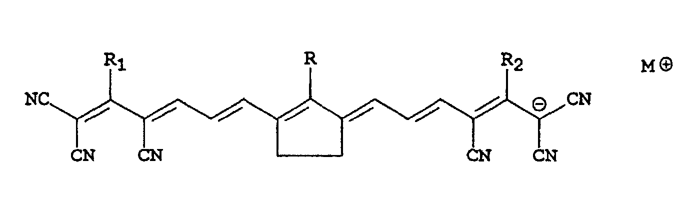 wherein R is a straight-chain or cyclic secondary or tertiary amine, R₁ and R₂ are independently heterocyclic or carbocyclic aromatic groups, and M⁺ is a monovalent cation.

These compounds have been found not only to have the desired infrared radiation absorption characteristics but also to be soluble in water or water-miscible organic solvents that are often used to formulate and coat lithographic printing plate imaging compositions. In addition, these compounds are compatible with negatively charged polymers that may be present in those compositions. In other words, no precipitates are formed when such compounds and polymers are mixed.

The compounds can also be used as filter dyes that are compatible with components in color and black-and-white photographic silver halide layers, and that do not adversely affect the sensitometric properties of such layers. We have also found that the compounds have desirable raw stock keeping.

The compounds of this invention are oxonol infrared radiation sensitive dyes ("IR dyes") that comprise a methine linkage conjugated with 2 cyclic or aliphatic groups, one of which is negatively charged. They are soluble in water or any of the water-miscible organic solvents that are commonly useful for preparing heat-sensitive lithographic imaging compositions (for example, methanol, ethanol, isopropanol, 1-methoxy-2-propanol, methyl ethyl ketone, tetrahydrofuran, acetonitrile, butyrolactone and acetone). Preferably, the IR dyes are soluble in either water or methanol, or a mixture of water and methanol. Solubility in water or the water-miscible organic solvents means that the oxonol IR dye can be dissolved at a concentration of at least 0.5 g/l at room temperature.

The oxonol IR dyes are sensitive to radiation in the near-infrared and infrared regions of the electromagnetic spectrum. Thus, they have a λₘₐₓ greater than 700 nm (preferably a λₘₐₓ of from 750 to 900 nm, and more preferably a λₘₐₓ of from 800 to 850 nm).

The oxonol IR dyes can be synthesized using general procedures described by Hamer in The Cyanine Dyes and Related Compounds, Interscience Publishers, 1964. A preferred synthetic method is described below.

The oxonol IR dyes of this invention are represented by Structure DYE shown as follows: 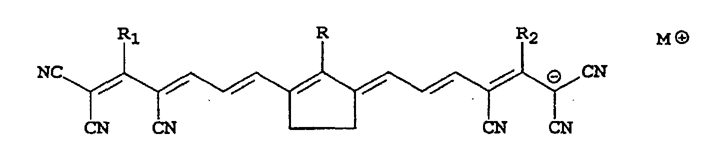 wherein R is a secondary or tertiary amine. The nitrogen atom of this amine group can be substituted, for example, with one or more substituted or unsubstituted alkyl groups having 1 to 20 carbon atoms (methyl, ethyl, isopropyl, *t*-butyl, hexyl, dodecyl, aminoethyl, methylsulfonaminoethyl and other groups readily apparent to one skilled in the art), substituted or unsubstituted aryl groups (such as phenyl, naphthyl, xylyl, *m*-carboxyphenyl and others that would be readily apparent to one skilled in the art), substituted or unsubstituted heterocyclic groups preferably having 3 to 9 carbon, oxygen, nitrogen and sulfur atoms in the ring structure (such as morpholino, pyridyl, pyrimidyl, thiomorpholino, pyrrolidinyl, piperazinyl and others that would be readily apparent to one skilled in the art). In addition, R can be 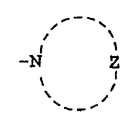 wherein Z represents the carbon, nitrogen, oxygen and sulfur atoms necessary to complete a substituted or unsubstituted 5- to 9-membered heterocyclic ring (such as morpholino, thiomorpholino, piperidinyl and piperazinyl).

Preferably, R is a secondary amine having at least 1 phenyl substituent, or R is 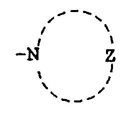 wherein Z represents the carbon, nitrogen, sulfur and oxygen atoms necessary to complete a substituted or unsubstituted 5- or 6-membered heterocyclic group. Most preferably, Z represents the carbon, nitrogen and oxygen atoms necessary to complete a substituted or unsubstituted morpholino, thiomorpholino or piperazinyl group.

R₁ and R₂ are independently substituted or unsubstituted heterocyclic or carbocyclic aromatic groups preferably having from 5 to 12 atoms in the aromatic ring. Preferably, R₁ and R₂ represent the same aromatic group. Useful aromatic groups include, but are not limited to, substituted or unsubstituted phenyl groups, substituted or unsubstituted naphthyl groups and substituted or unsubstituted furyl groups, substituted or unsubstituted thiophenyl groups, and substituted or unsubstituted benzofuryl groups. These aromatic groups can be substituted with one or more amino, methoxy, carboxy, sulfo, sulfonamido or alkylsulfonyl groups. Preferably, when R₁ and R₂ are substituted, they each have one or more of the same substituents.

M⁺ is a suitable monovalent cation such as an alkali metal ion (lithium, sodium or potassium), an ammonium ion, a trialkylammonium ion (such as trimethylammonium, triethylammonium or tributylammonium ions), a tetraalkylammonium ion (such as tetramethylammonium ion), pyridinium ion or tetramethyl guanidinium ion.

Examples of oxonol IR dyes of this invention include, but are not limited to, the following compounds:

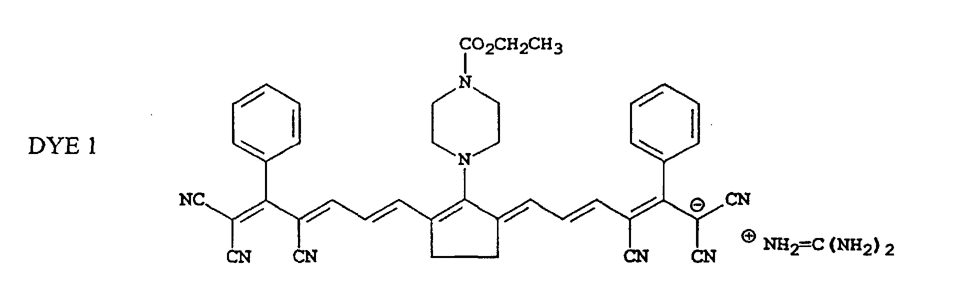

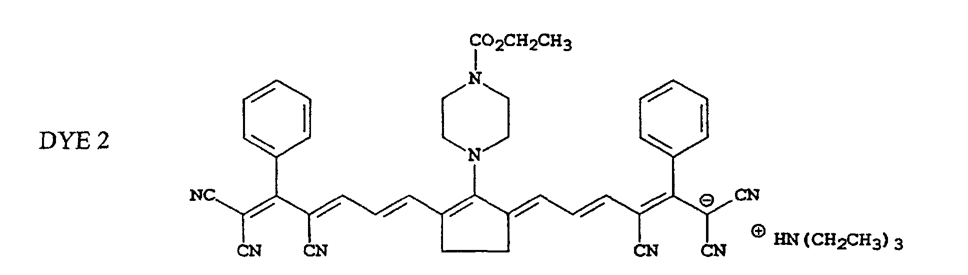

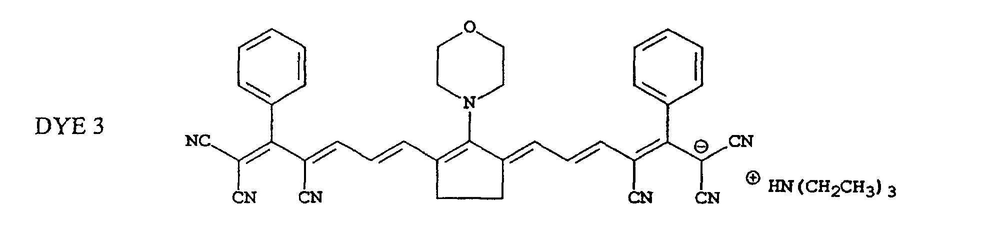

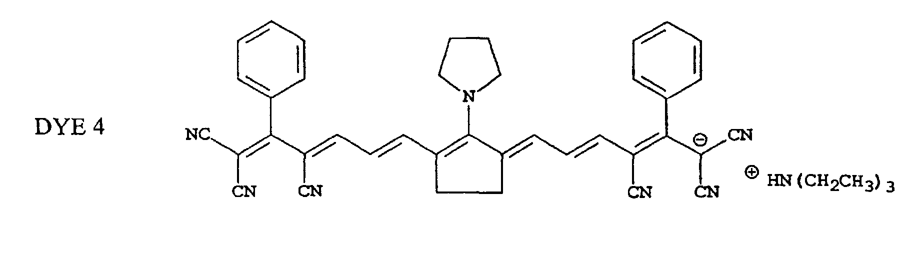

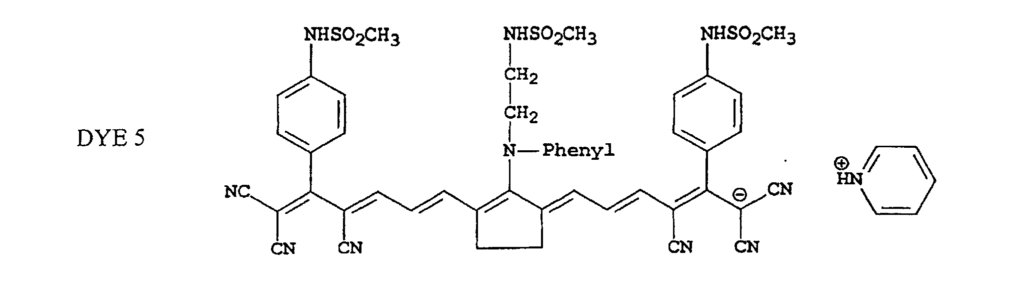

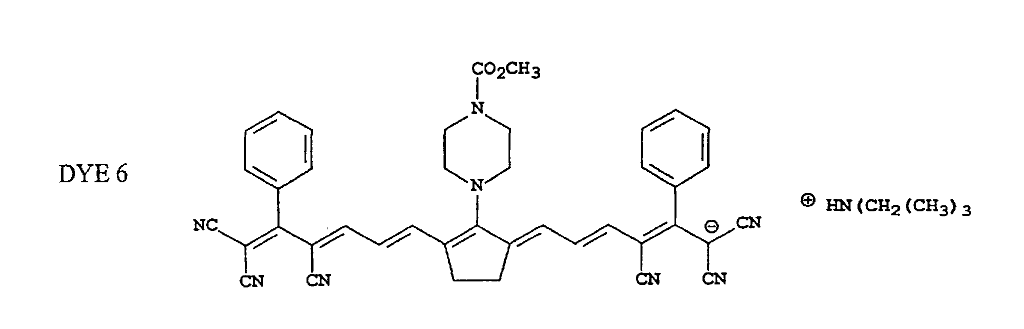

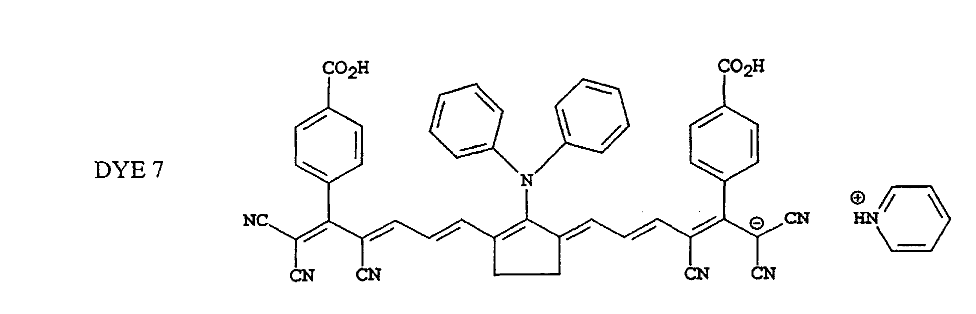

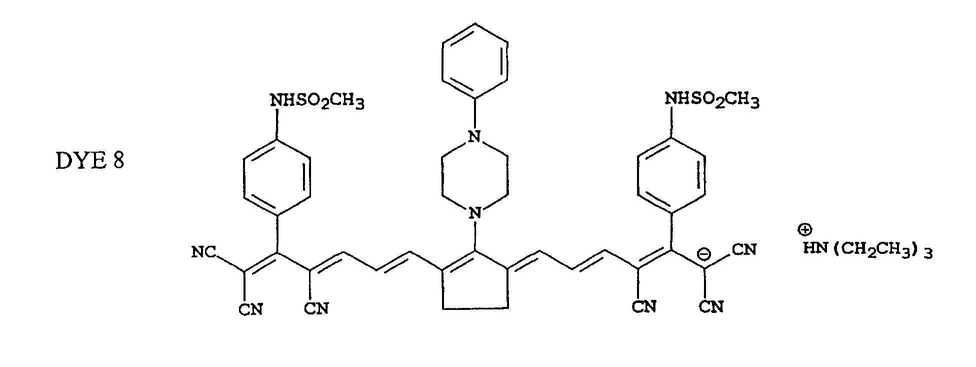

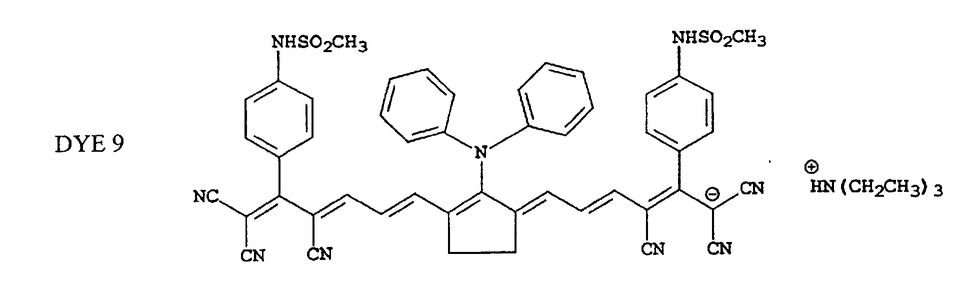

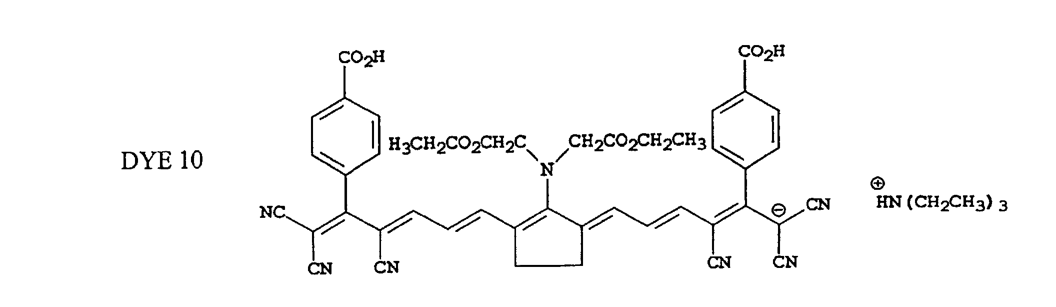

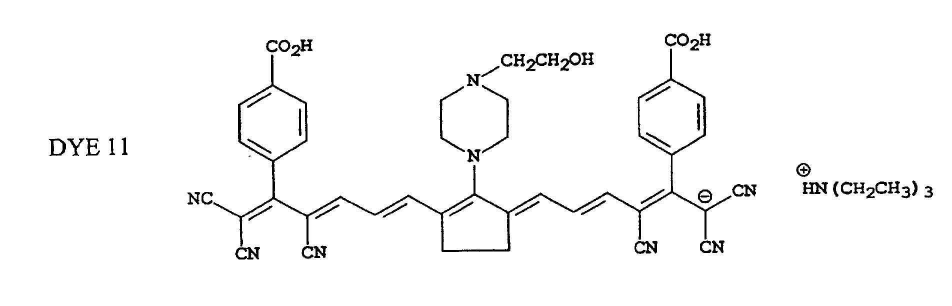

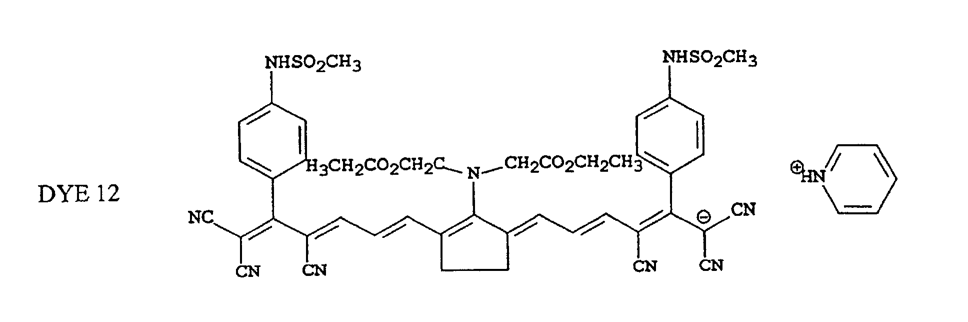

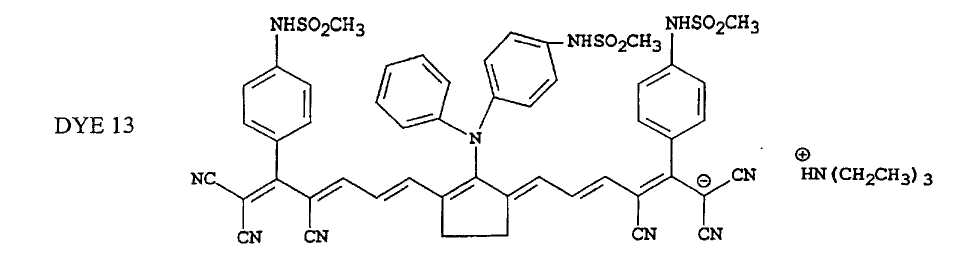

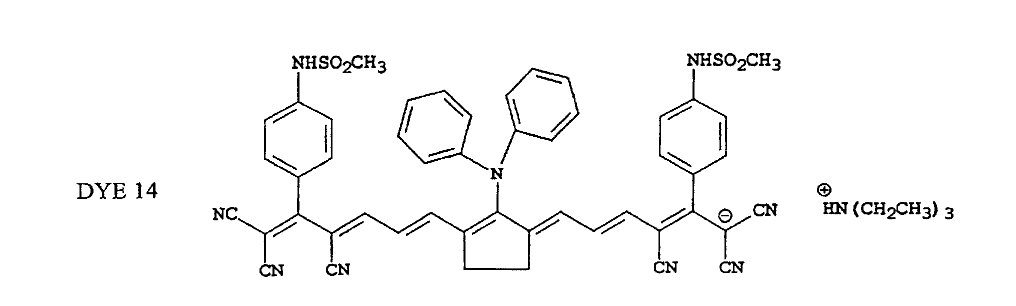

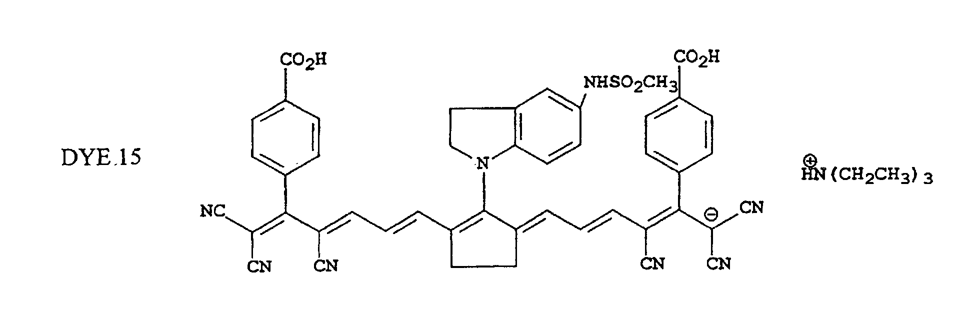

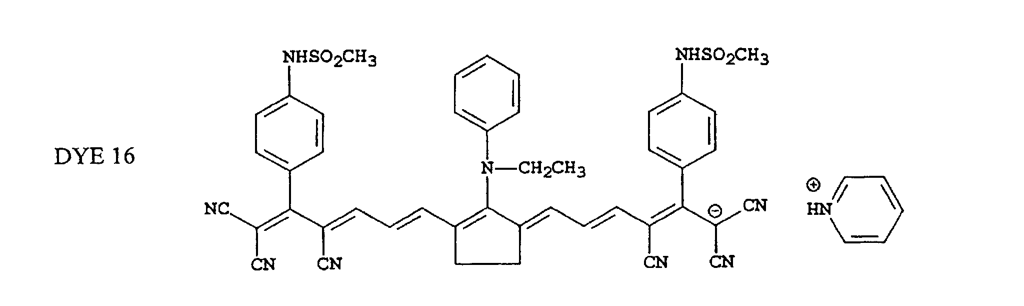

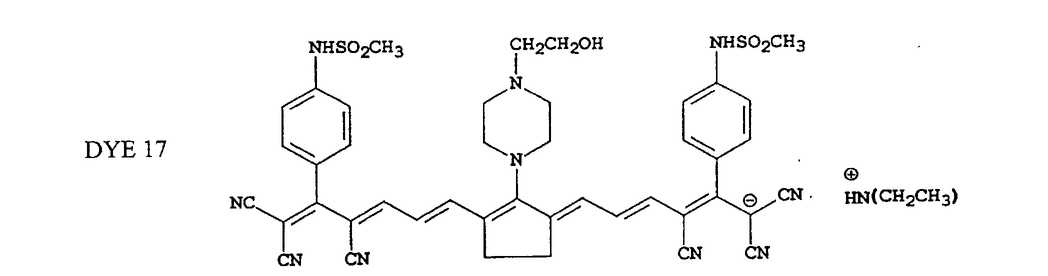

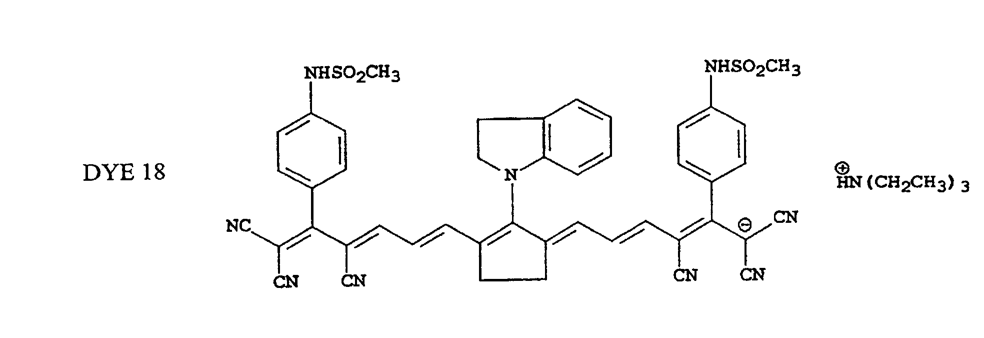

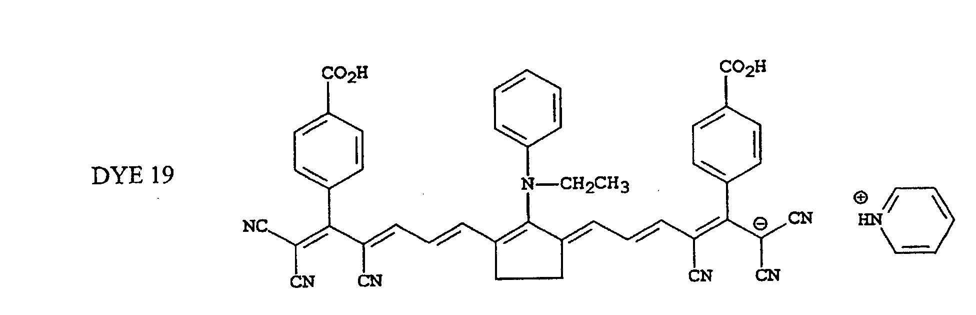

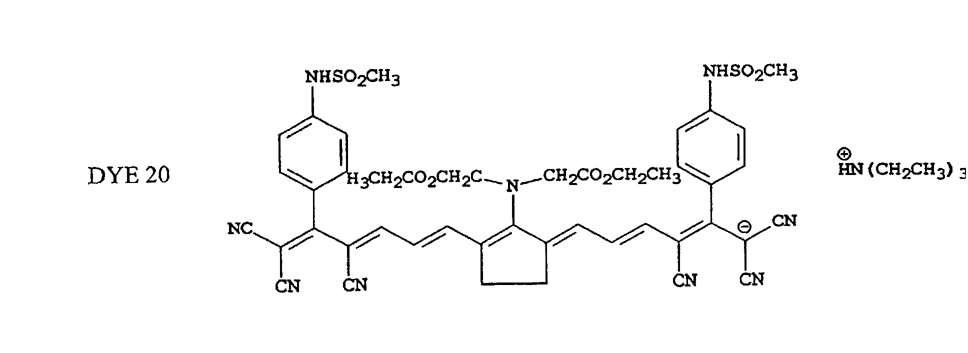

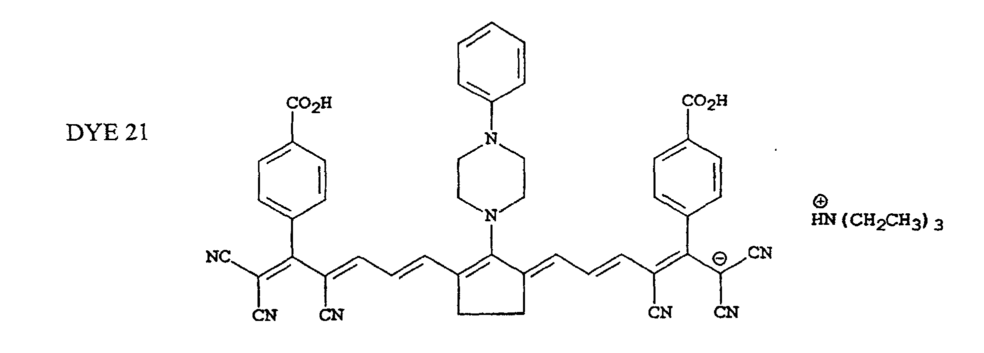

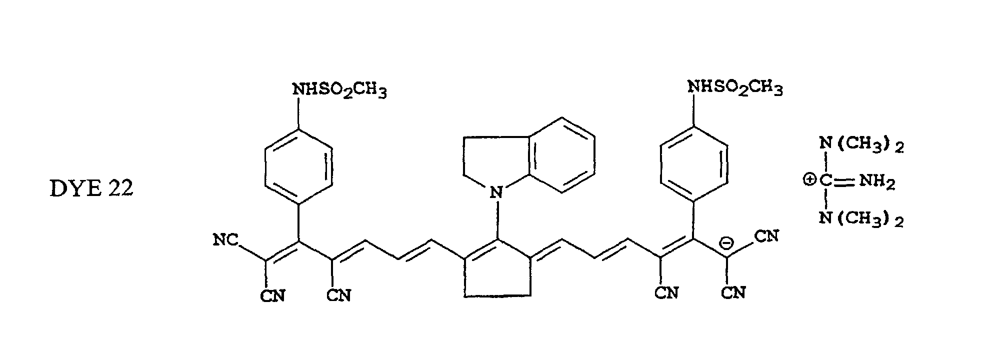

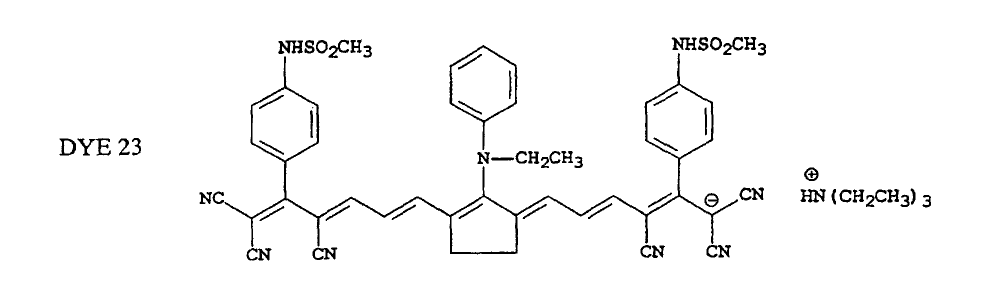

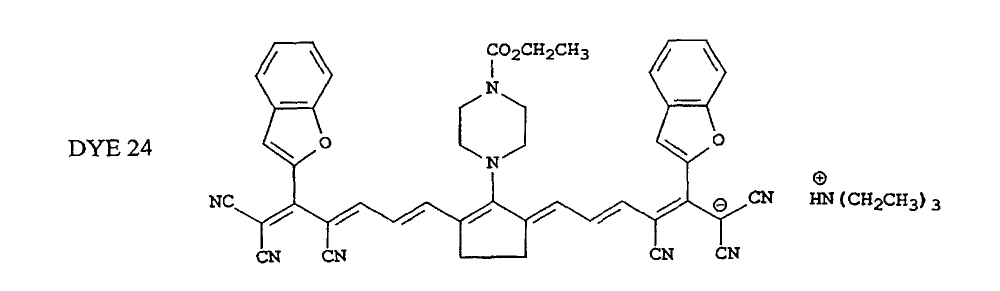

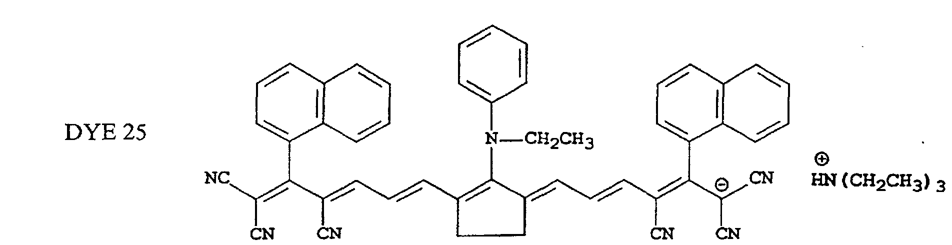

Further oxonol IR dyes are defined in reference to Structure DYE wherein R₁ and R₂ are each a phenyl group, as follows:

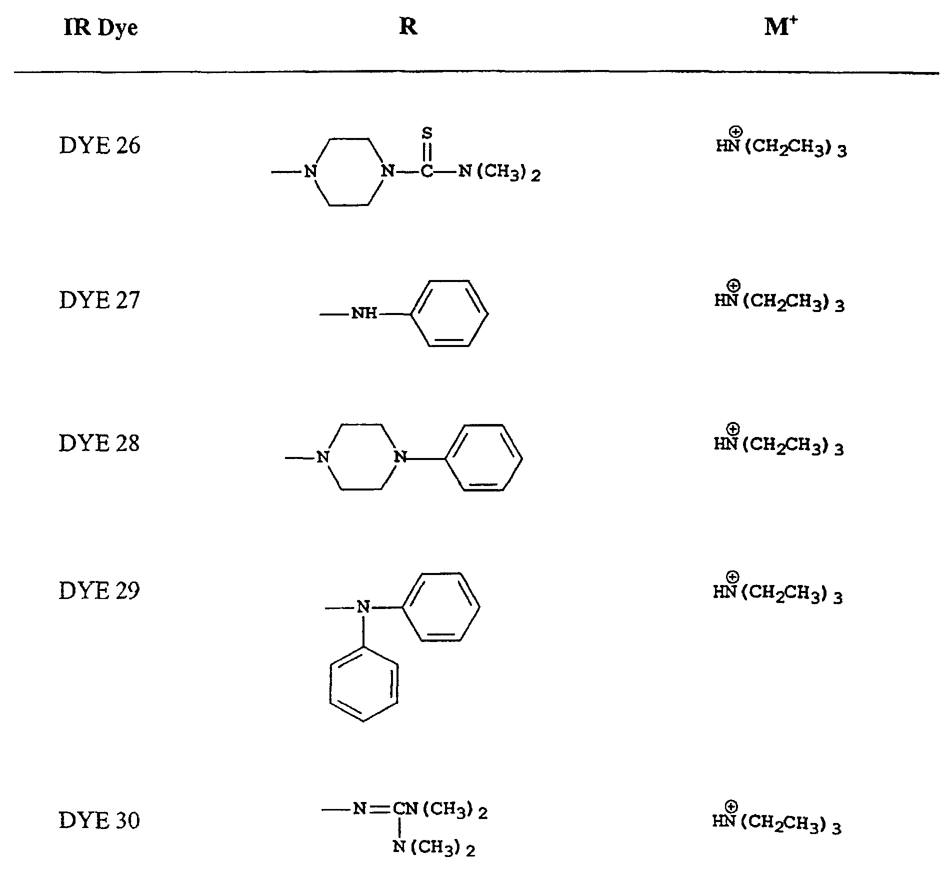

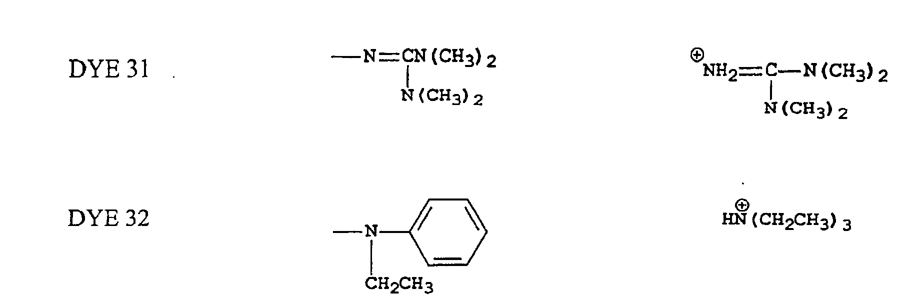

The most preferred compounds of this invention will depend upon their use. For example, IR Dyes 1, 2, 3, 4 and 6 are most useful in heat-sensitive printing plates, while IR Dyes 7, 9, 13, 14, 15 and 27 are most useful as filter dyes in photographic materials.

Oxonol IR Dye 3 was prepared using the following synthetic scheme that is generally useful for all of the compounds of this invention.

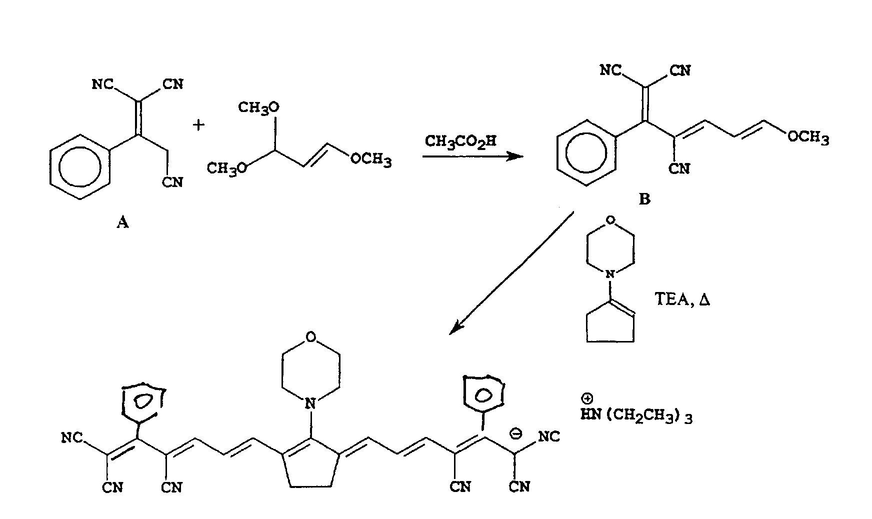

A sample of intermediate A (15 g, 0.077 moles) and trimethoxypropene (26.5 g, 0.2 moles) were added together to a 200 ml beaker containing acetic acid (60 ml). The solution was stirred mechanically using a overhead stirrer at room temperature. The suspension dissolved and as the solution was warmed slightly, it became green in color. As soon as the solution was homogeneous, a yellow solid began to precipitate from the solution. The reaction mixture was stirred an additional 2 hours before the yellow solid was collected by filtration. The solid was rinsed with acetic acid (120 ml) and dried in a vacuum oven at 50°C for 16 hours. The result was 17.5 g of solid intermediate B at 87% yield. NMR (300 Mhz, CDC13) dtms 7.5 (m, 4H), 7.3 (m, 2H), 6.25 (m, 2H).

A sample of intermediate B (15 g, 0.57 moles) was heated to boiling in acetonitrile (50 ml) in a 250-ml beaker on a hot plate. The reaction mixture was stirred mechanically and 4-(1-cyclopentenyl-1-yl)morpholine (Aldrich Chemical Co., 4.4 g, 0.28 moles) was added. Triethylamine (9.5 ml) was added to the solution and it immediately turned purple in color and then eventually green in color. The reaction mixture was heated an additional 15 minutes and then filtered while hot through a sintered glass funnel. A filtrate set up in the filter funnel and acetonitrile (50 ml) and water (10 ml) were added. The solution was again heated to boiling at which time the solids had dissolved. After 15 minutes, the solution was allowed to cool with stirring at room temperature. A solid precipitate formed that was collected by filtration. It was recrystallized from acetonitrile (90 ml) and water (10 ml). A green solid was collected and dried to give 10.6 g of IR Dye 3 at 50% yield. HPLC showed that the material was 99% pure. λₘₐₓ = 815 nm (CH₃OH), e = 13.7 x 10⁴.

The following examples illustrate a preferred utility for the compounds of this invention.

### Use Example 1:

An imaging formulation was prepared using the components (parts by weight) shown in TABLE I below.

**TABLE I**

| **Component** | **Formulation** |
|---|---|
| Heat sensitive polymer | 0.30 |
| Oxonol IR Dye 1 | 0.03 |
| Water | 4.14 |
| Acetone | 4.50 |

The formulation was coated at a dry coating weight of 1.0 g/m² onto a grained phosphoric acid-anodized aluminum support. The resulting printing plate was dried in a convection oven at 82 °C for 3 minutes. The imaging layer of the printing plate was imaged at 830 nm on a plate setter using doses ranging from 360 to 820 mJ/cm². The blue imaging layer produced a deep blue image.

The imaged plate was mounted on the plate cylinder of a commercially available full-page printing press (A. B. Dick 9870 duplicator) for a press run. A commercial black ink and Vam Universal Pink fountain solution (from Varn Products Co.) were used. The plate developed on press within 60 seconds of the press run. The on-press processed plates rolled up after 10 sheets and printed with full density and high image quality for at least 1,000 impressions. The printing plate comprising oxonol IR dye 1 (at a 10:1 polymer:IR dye weight ratio and at 50% loading) required only 250 mJ/cm² of laser energy.

The heat-sensitive polymer poly(vinyl benzyl thiosulfate sodium salt-co-methyl methacrylate) shown in TABLE I was prepared as follows:

Vinyl benzyl chloride (10 g, 0.066 mol), methyl methacrylate (15.35 g, 0.153 mol) and AIBN (0.72g, 4 mmol) were dissolved 120 ml of toluene. The solution was purged with dry nitrogen and then heated at 65°C overnight. After cooling to room temperature, the solution was dropwise added to 1200 ml of isopropanol. The resulting white powdery polymer was collected by filtration and dried under vacuum at 60°C overnight. ¹H NMR analysis indicate that the copolymer contained 44 mol% of vinyl benzyl chloride.

This polymer (16 g) was dissolved in 110 m of N,N'-dimethylformamide. To this solution was added sodium thiosulfate (12 g) and water (20 ml). Some polymer precipitated out. The cloudy reaction mixture was heated at 90°C for 24 hours. After cooling to room temperature, the hazy reaction mixture was dialyzed against water. A small amount of the resulting polymer solution was freeze dried for elemental analysis and the rest of the polymer solution was subject to imaging testing. Elemental analysis indicated that all the vinyl benzyl chloride was converted to sodium thiosulfate salt.

### Use Examples 2-6: Printing Plates Containing Other Oxonol IR Dyes

The following printing plates were prepared and used in printing as described above in Use Example 1. The imaging layers in the printing plates contained the oxonol IR dyes in TABLE II below. Each printing plate was successfully imaged and used to produce 1,000 printed sheets of good quality on the A.B. Dick press.

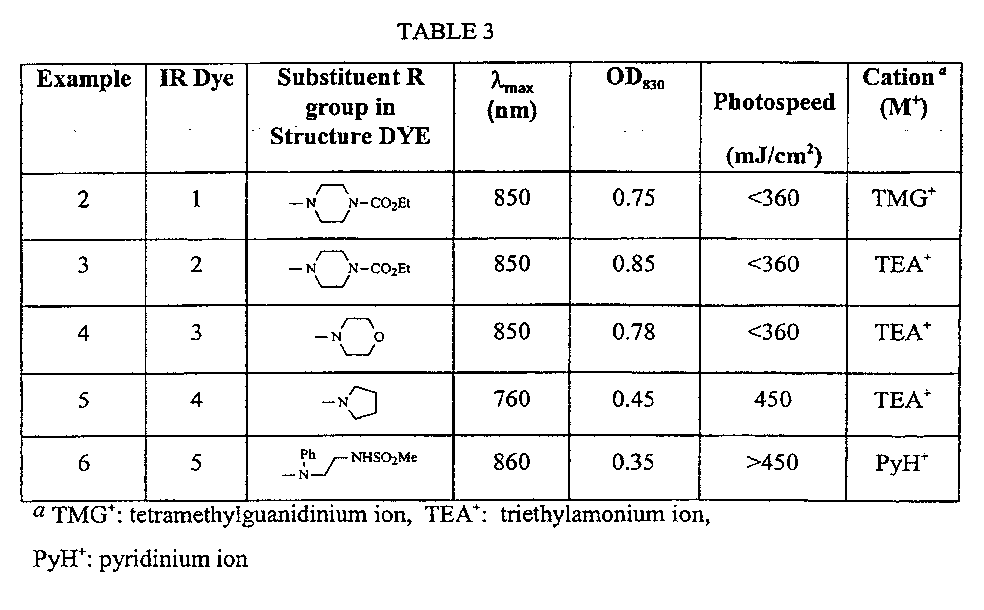

## Claims

1. A compound that absorbs radiation and has a λₘₐₓ greater than 700 nm as measured in water or a water-miscible organic solvent, and represented by the Structure DYE as follows: 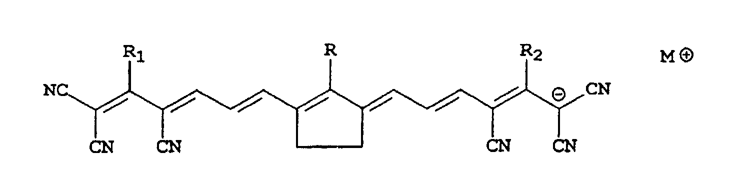 wherein R is a secondary or tertiary amine, R₁ and R₂ are independently heterocyclic or carbocyclic aromatic groups, and M⁺ is a monovalent cation.

2. The compound of claim 1 having a λₘₐₓ of from 750 to 900 nm as measured in water or said water-miscible organic solvent.

3. The compound of claim 2 having a λₘₐₓ of from 800 to 850 nm as measured in water or said water-miscible organic solvent.

4. The compounds of claim 1 wherein R is an amine that has one or more substituted or unsubstituted alkyl groups, substituted or unsubstituted aryl groups, or substituted or unsubstituted heterocyclic groups, or R is 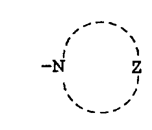 wherein Z represents the carbon, nitrogen, oxygen and sulfur atoms necessary to complete a substituted or unsubstituted 5- to 9-membered heterocyclic ring, and R₁ and R₂ are the same heterocyclic or carbocyclic aromatic group.

5. The compound of claim 4 wherein R is a secondary amine having at least one phenyl substituent, or R is 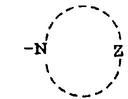 wherein Z represents the carbon, nitrogen, sulfur and oxygen atoms necessary to complete a substituted or unsubstituted 5- or 6-membered heterocyclic group, and R₁ and R₂ are the same substituted or unsubstituted phenyl or naphthyl group.

6. The compound of claim 1 that is 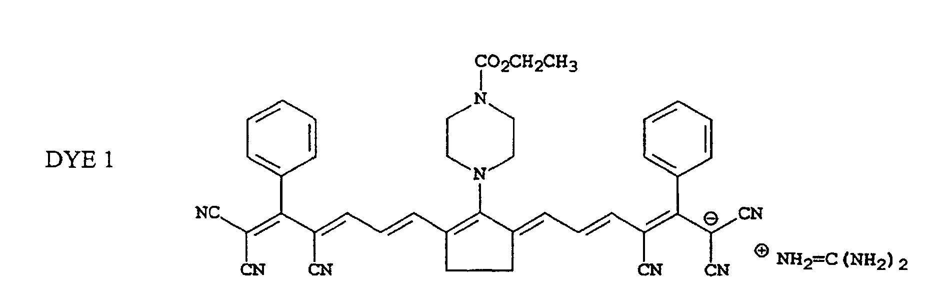 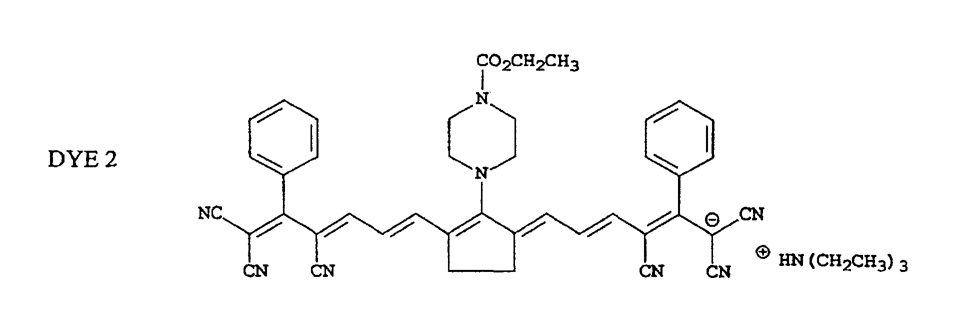 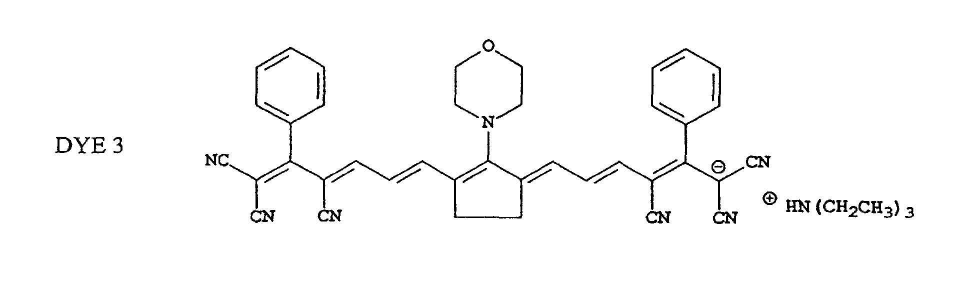 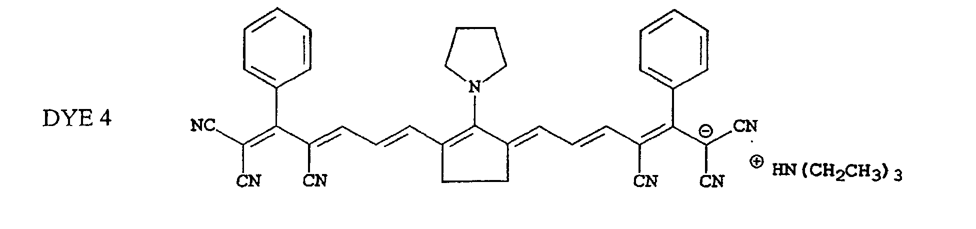 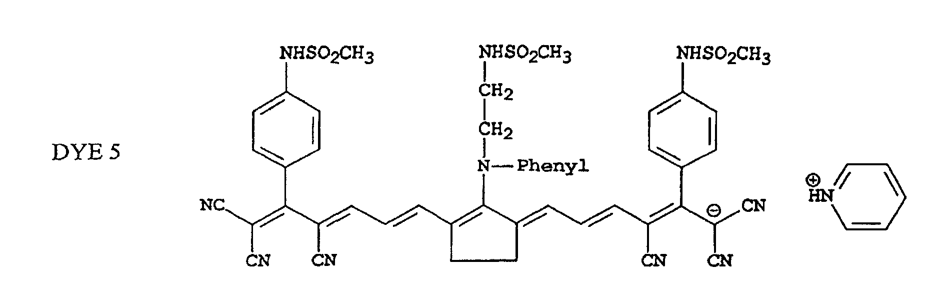 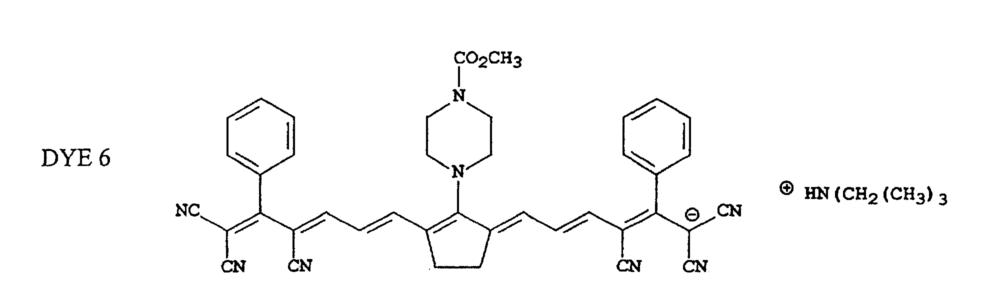 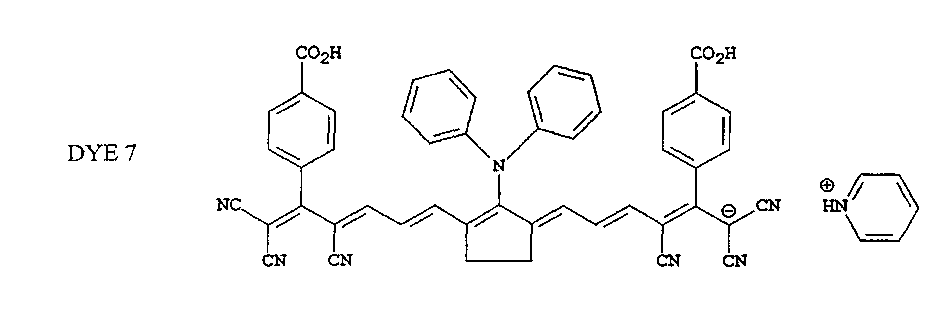 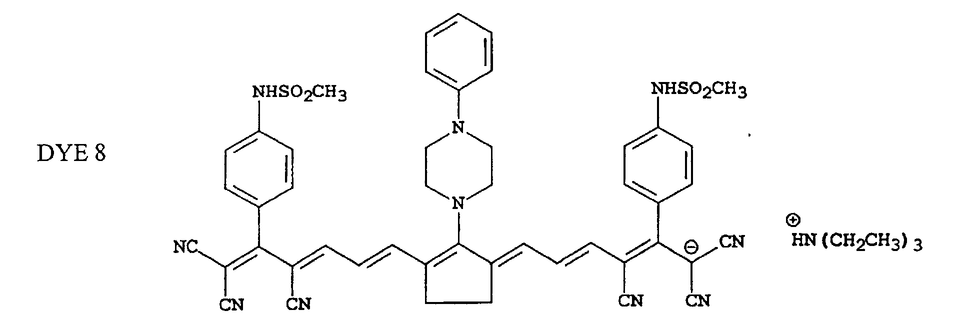 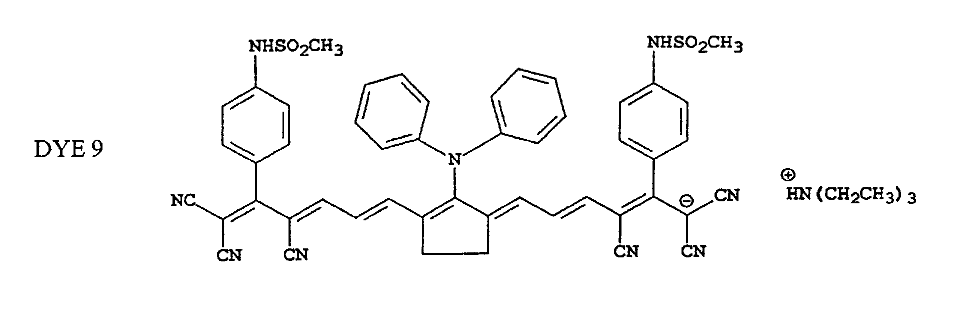 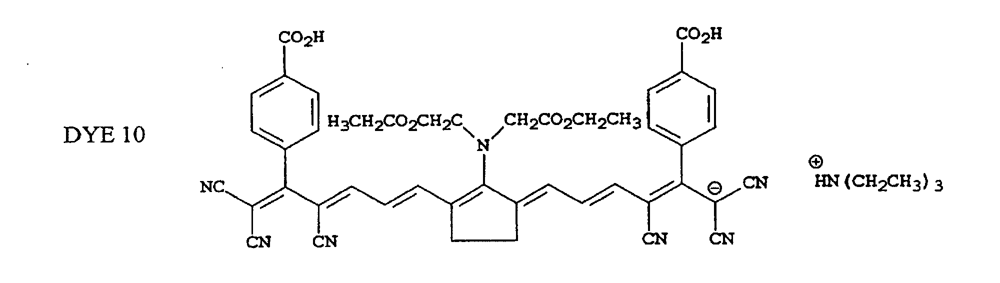 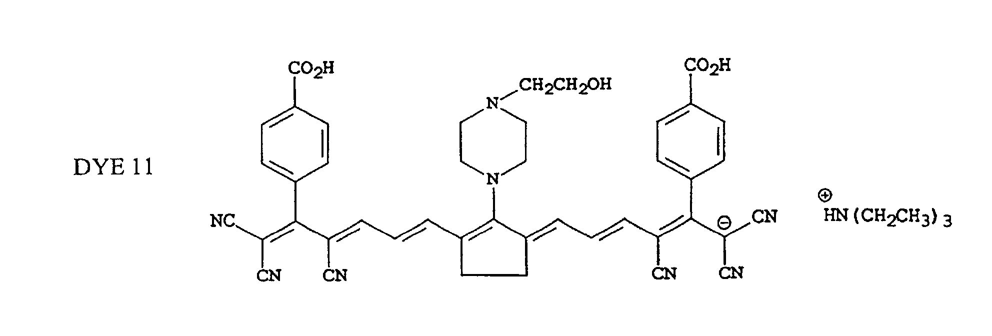 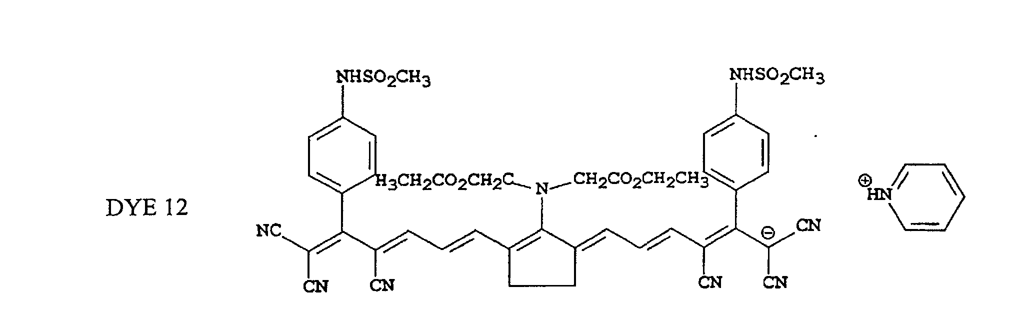 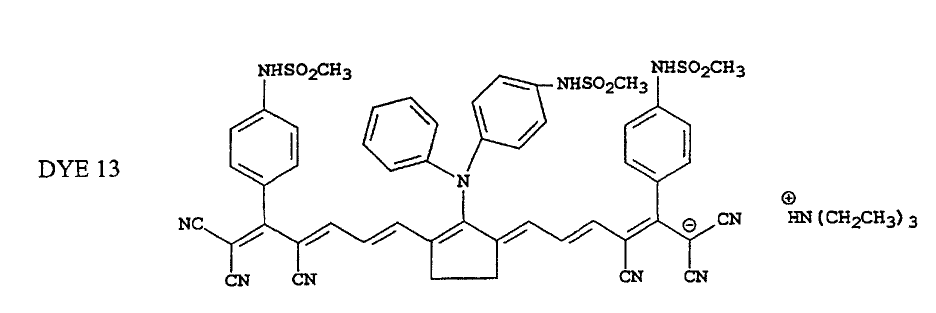 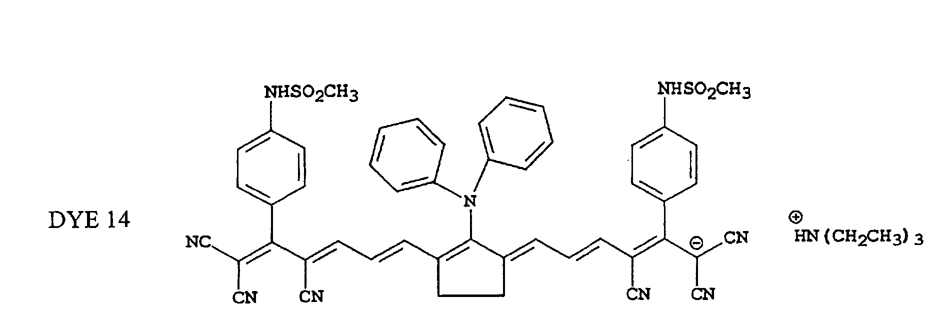 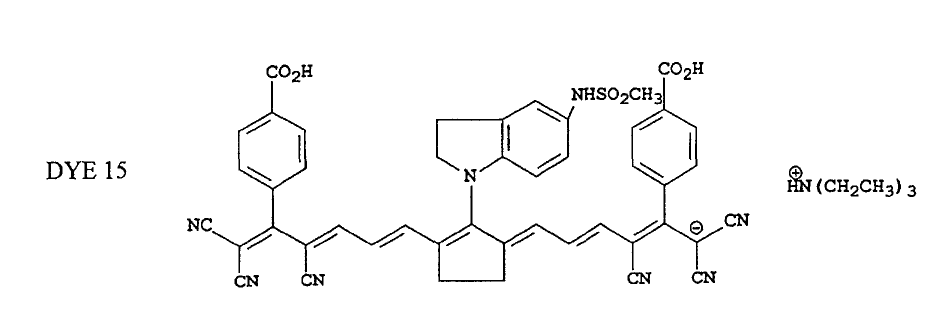 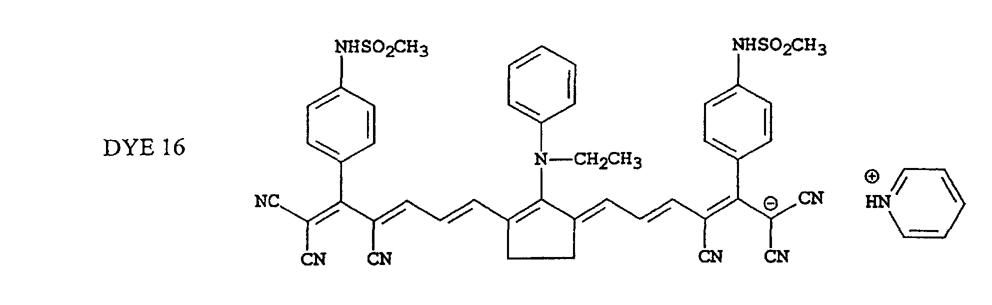 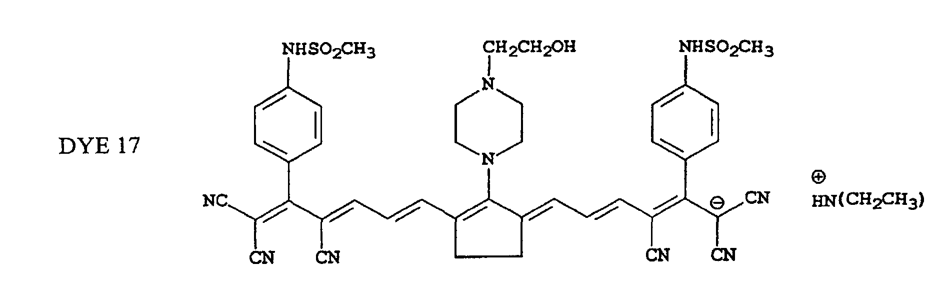 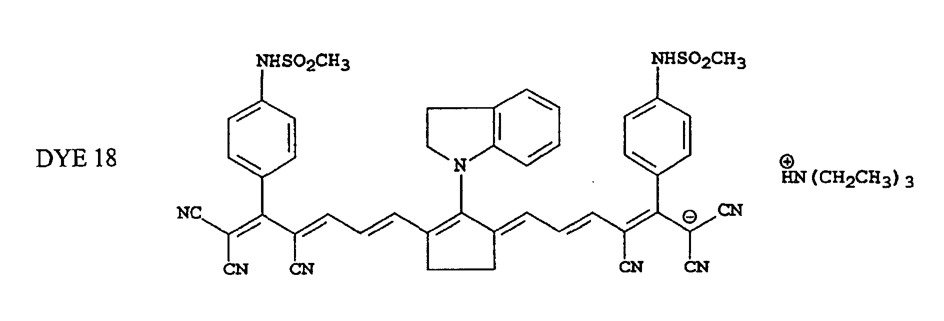 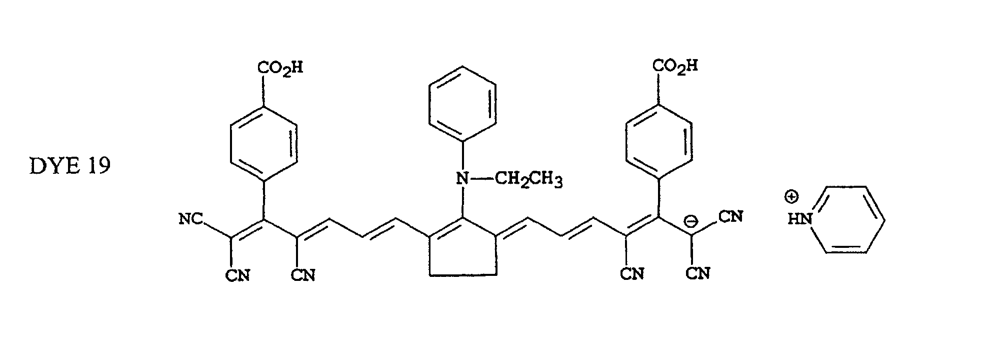 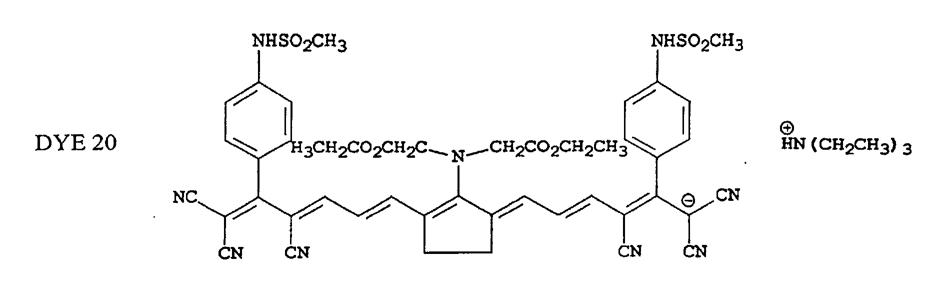 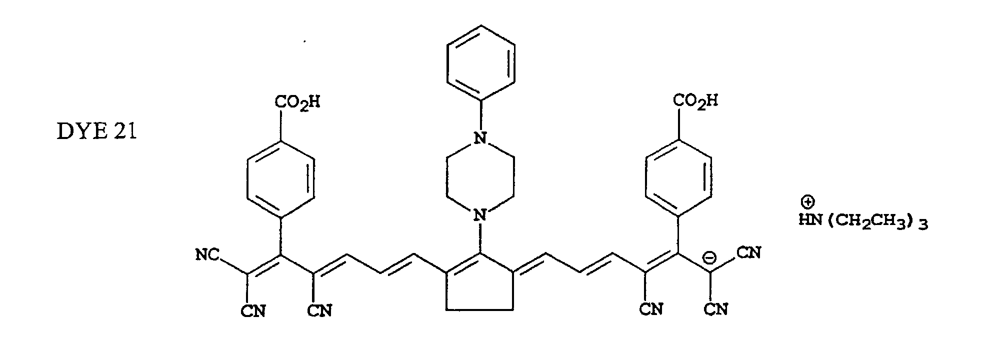 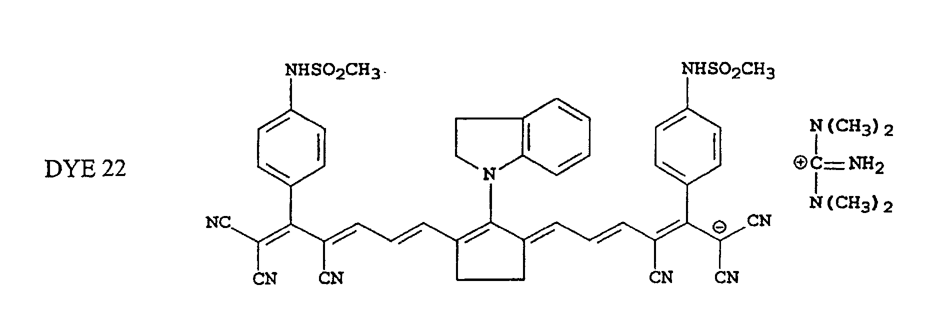 or

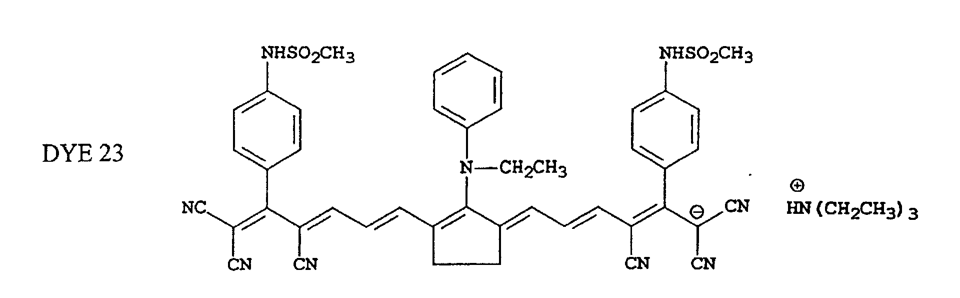

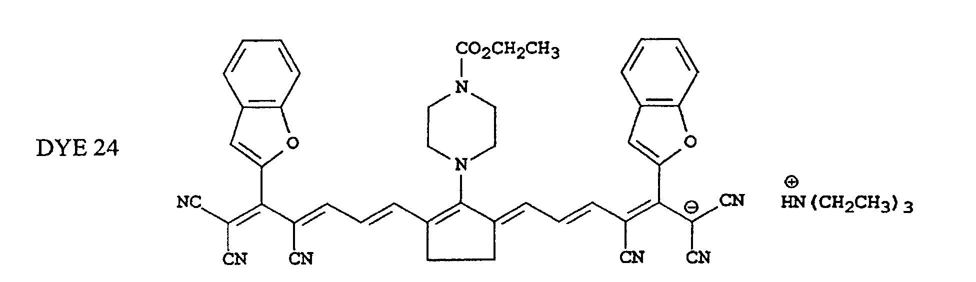

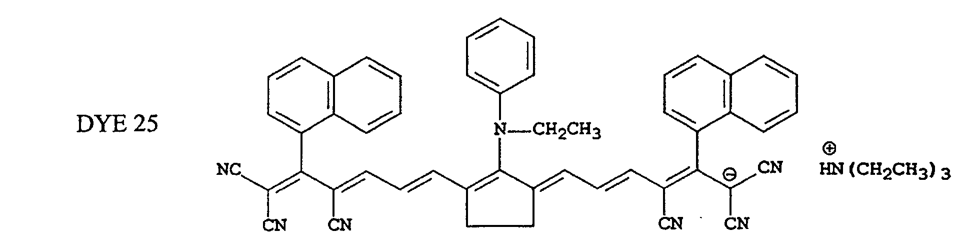

7. The compound of claim 1 wherein, in reference to Structure DYE, R₁ and R₂ are each a phenyl group and the IR Dye is:

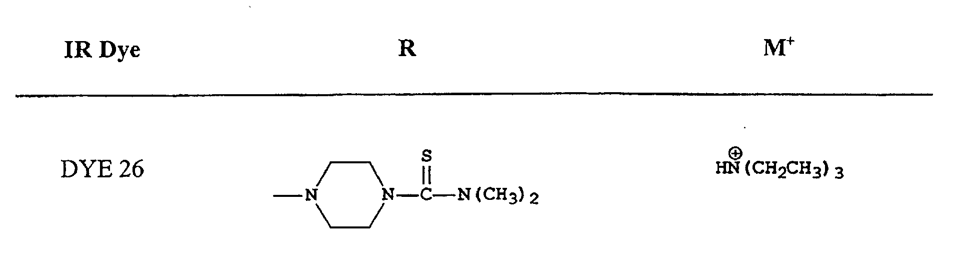

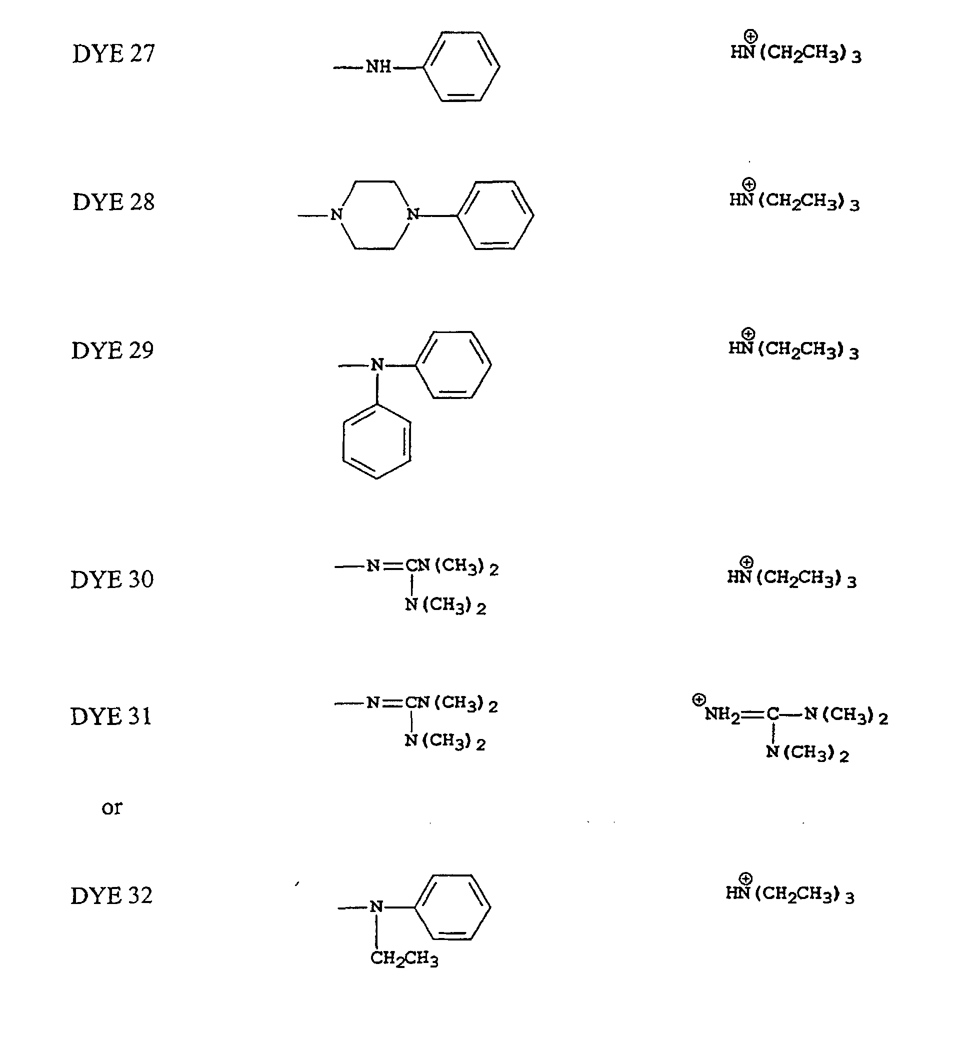

## Patentansprüche

1. Verbindung, die Strahlung absorbiert und einen λₘₐₓ-Wert von größer als 700 nm hat, gemessen in Wasser oder einem mit Wasser mischbaren, organischen Lösungsmittel, und die dargestellt wird durch die Struktur *Farbstoff*, wie folgt: 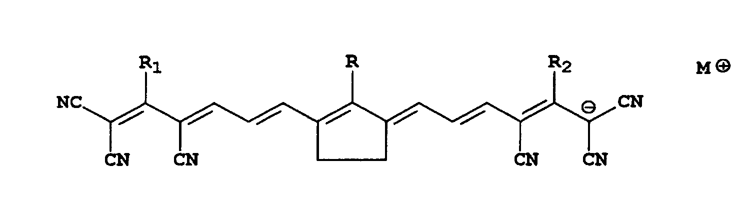 worin R ein sekundäres oder tertiäres Amin ist, R₁ und R₂ unabhängig voneinander für heterozyklische oder carbozyklische, aromatische Gruppen stehen, und M⁺ ein monovalentes Kation ist.

2. Verbindung nach Anspruch 1 mit einem λₘₐₓ-Wert von 750 bis 900 nm, gemessen in Wasser oder dem mit Wasser mischbaren, organischen Lösungsmittel.

3. Verbindung nach Anspruch 2 mit einem λₘₐₓ-Wert von 800 bis 850 nm, gemessen in Wasser oder dem mit Wasser mischbaren, organischen Lösungsmittel.

4. Verbindung nach Anspruch 1, worin R ein Amin ist, das ein oder mehrere substituierte oder unsubstituierte Alkylgruppen aufweist, substituierte oder unsubstituierte Arylgruppen oder substituierte oder unsubstituierte, heterozyklische Gruppen oder worin R steht für eine Gruppe der Formel 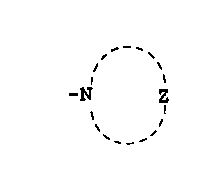 worin Z die Kohlenstoff-, Stickstoff-, Sauerstoff- und Schwefelatome darstellt, die erforderlich sind, um einen substituierten oder unsubstituierten 5- bis 9-gliedrigen, heterozyklischen Ring zu vervollständigen und worin R₁ und R₂ für die gleiche heterozyklische oder carbozyklische, aromatische Gruppe stehen.

5. Verbindung nach Anspruch 4, in der R ein sekundäres Amin ist mit mindestens einem Phenylsubstituenten, oder worin R steht für die Gruppe der Formel 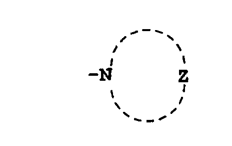 worin Z für die Kohlenstoff-, Stickstoff-, Schwefel- und Sauerstoffatome steht, die erforderlich sind, um eine substituierte oder unsubstituierte 5- oder 6-gliedrige, heterozyklische Gruppe zu vervollständigen, und worin R₁ und R₂ für die gleiche substituierte oder unsubstituierte Phenyl- oder Naphthylgruppe stehen.

6. Verbindung nach Anspruch 1, die besteht aus 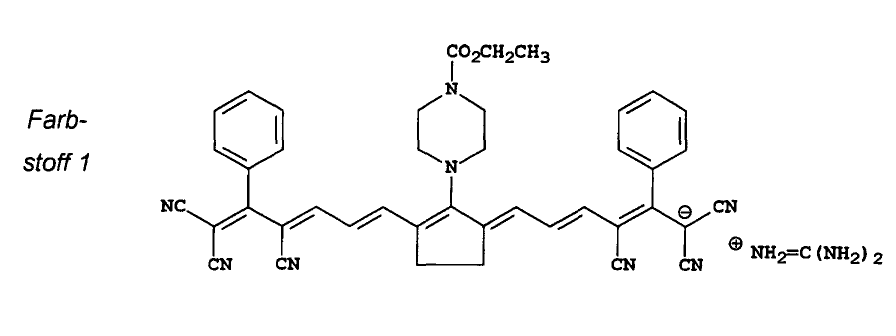 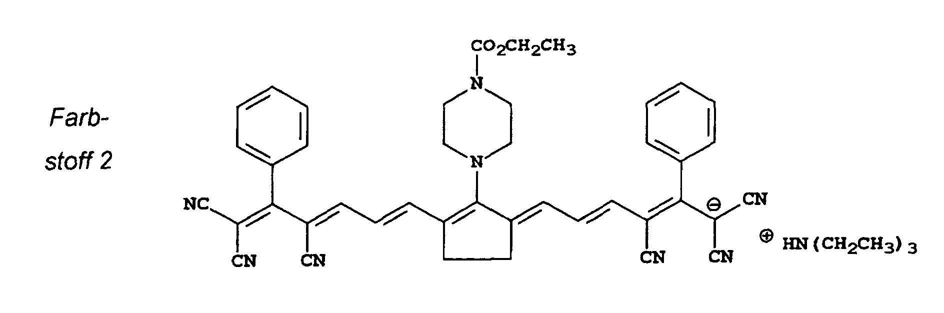 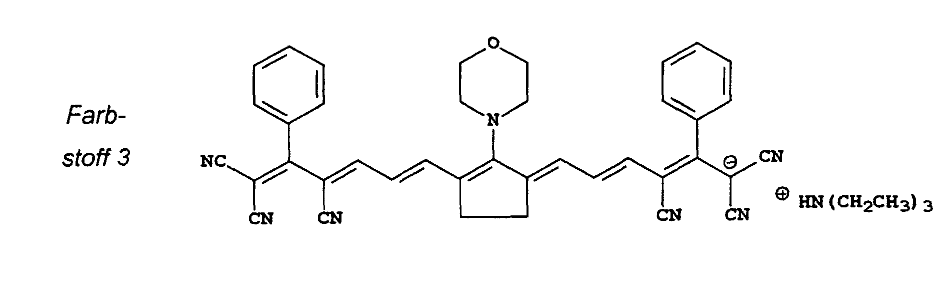 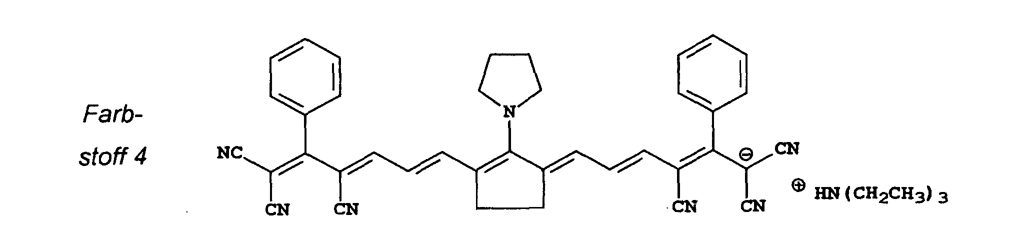 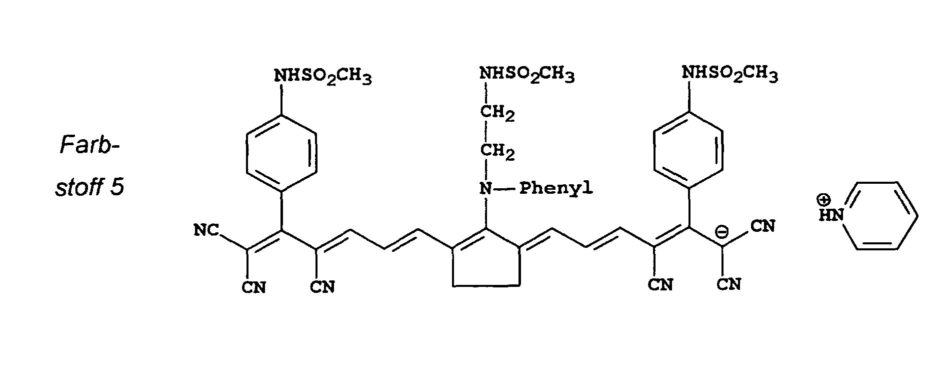 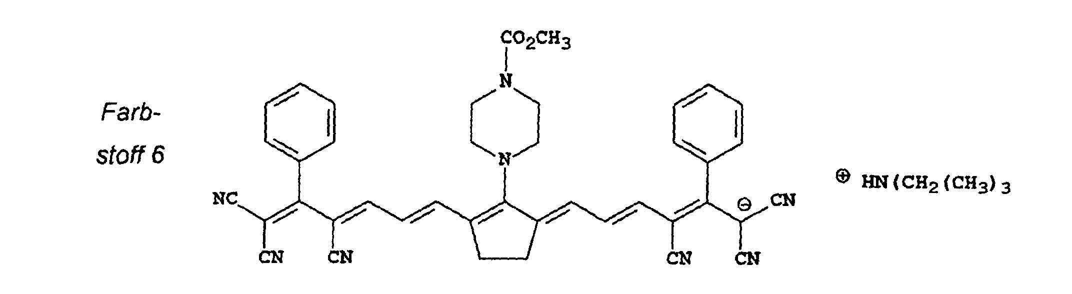 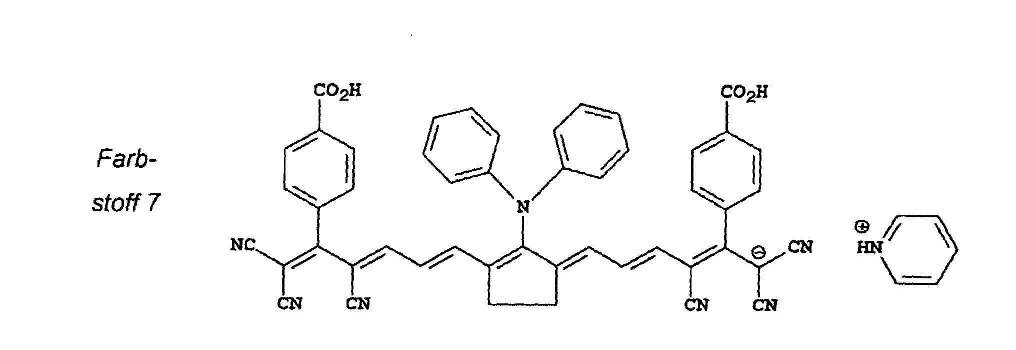 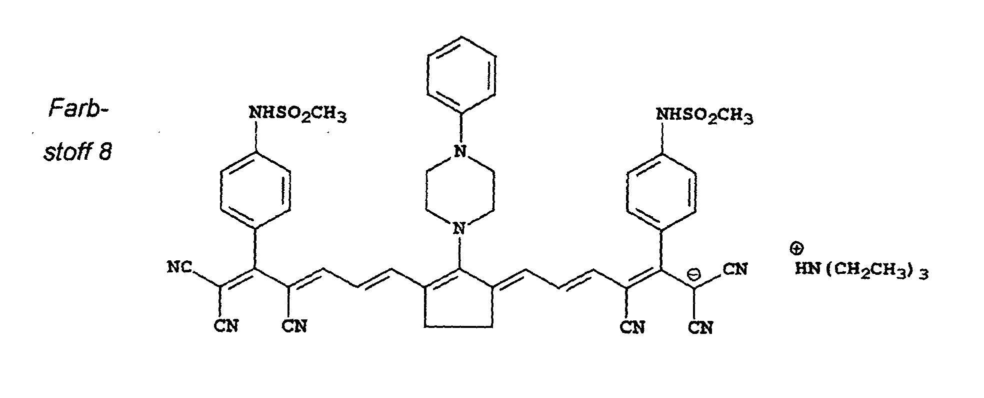 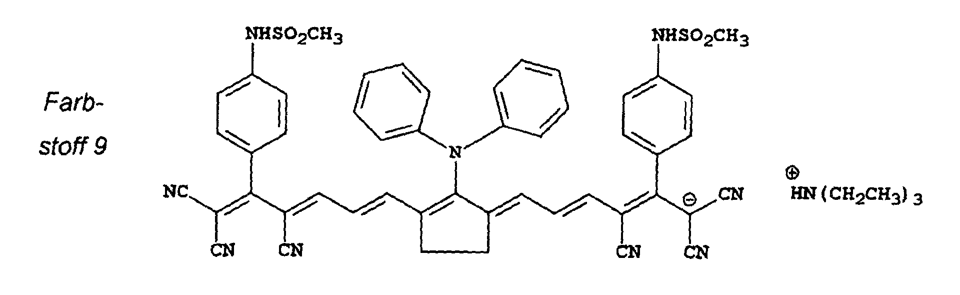 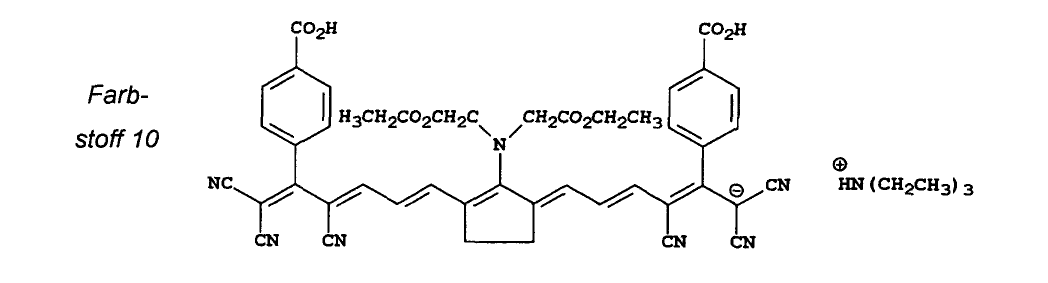 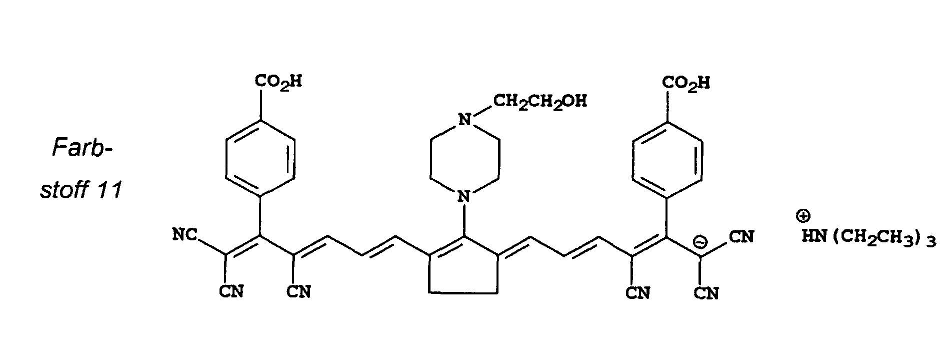 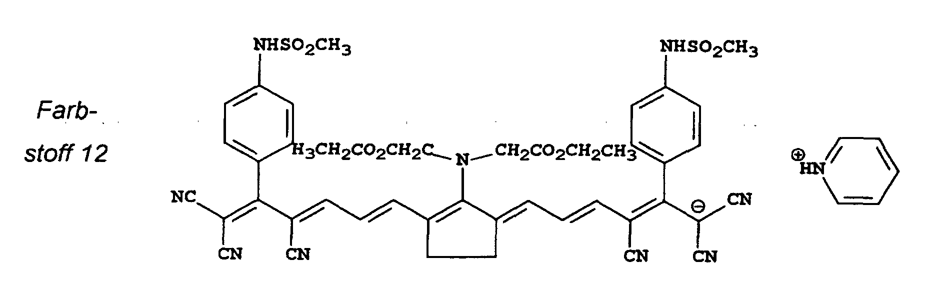 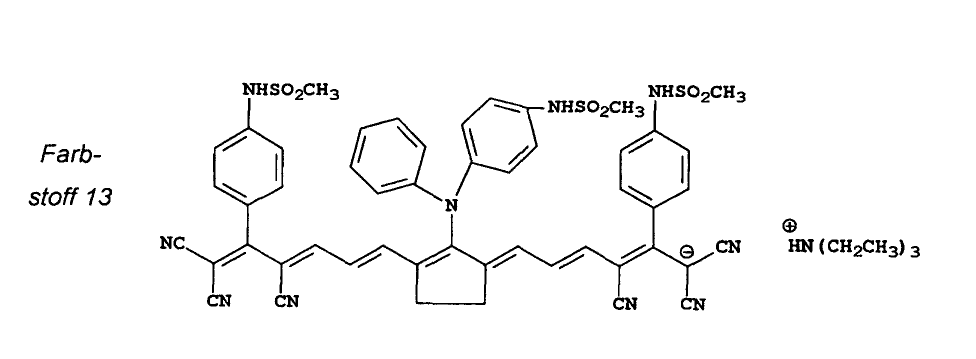 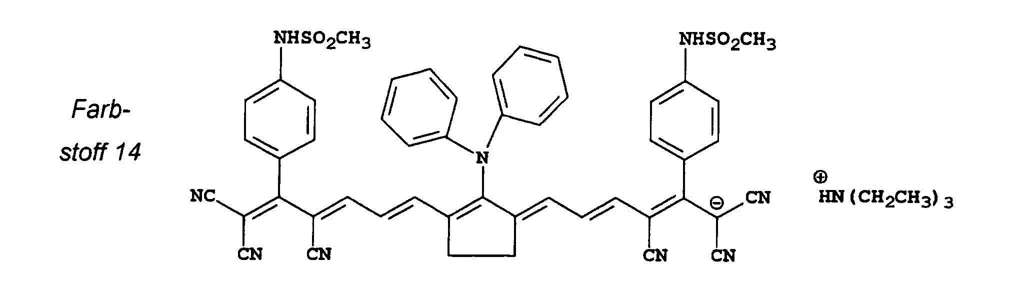 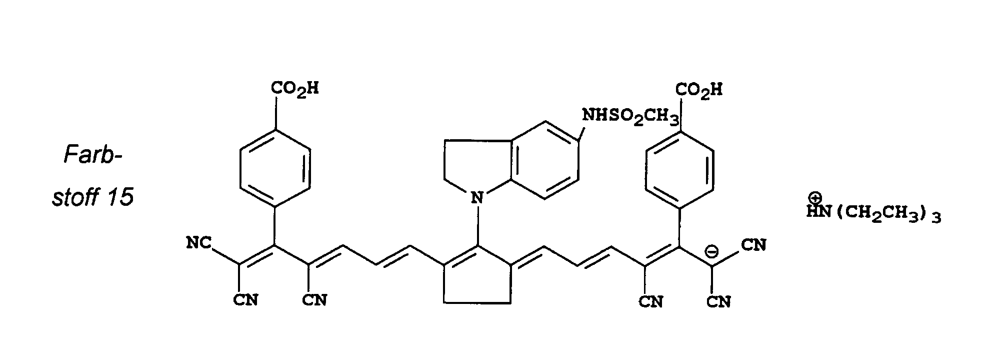 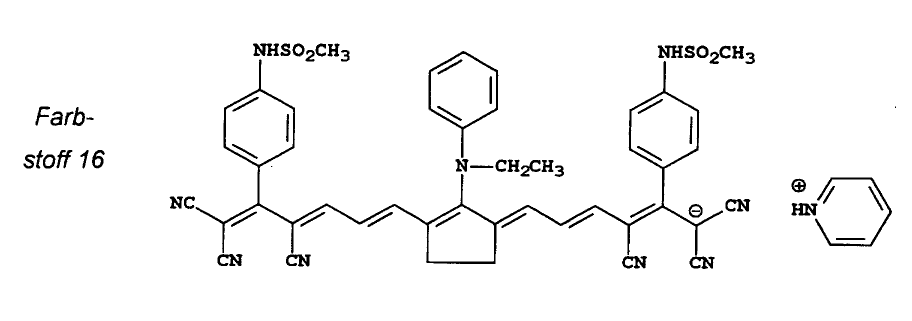 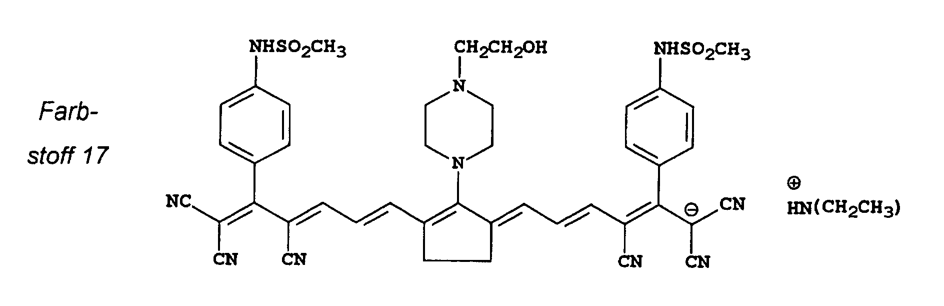 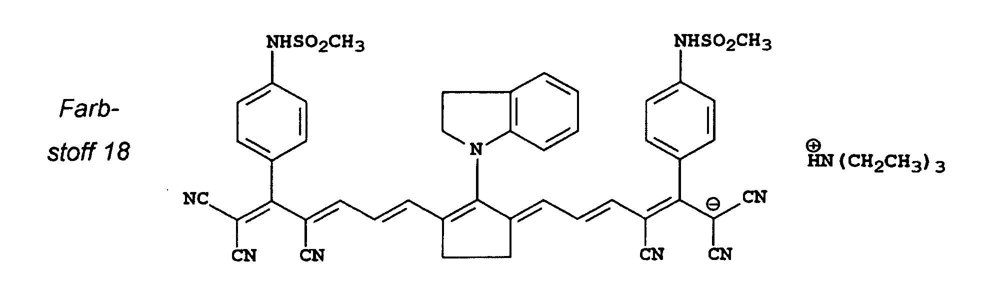 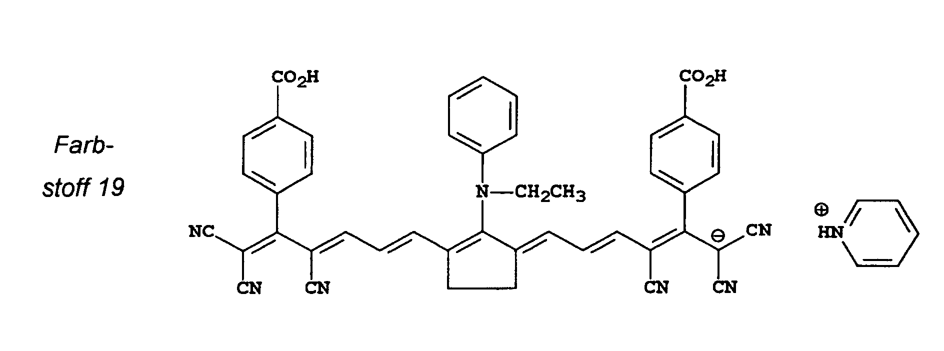 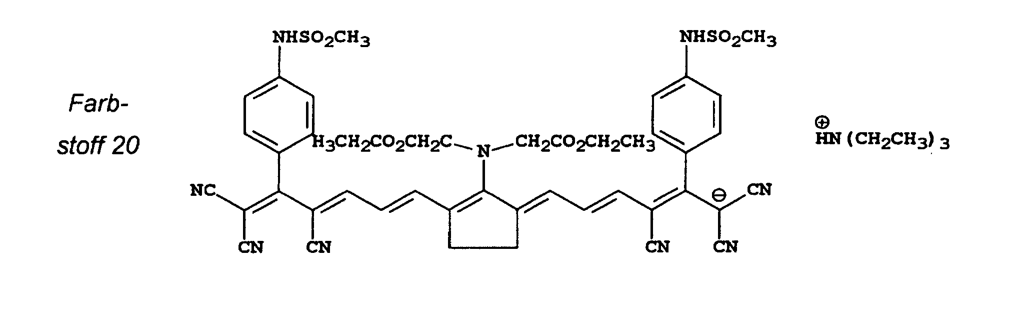 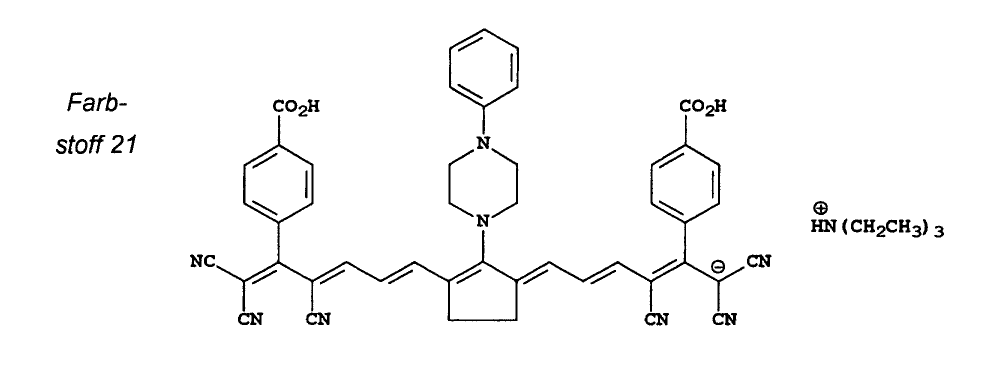 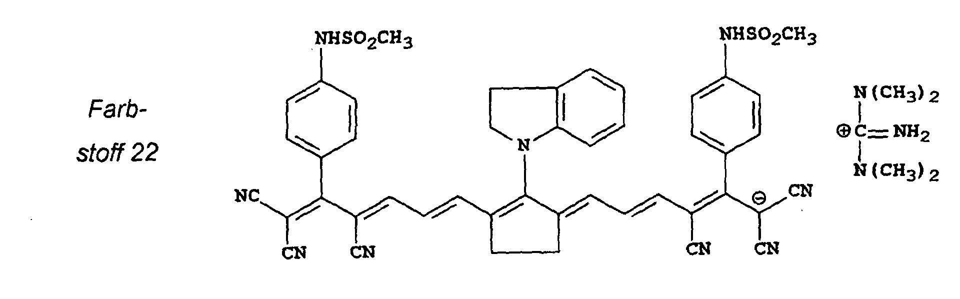 oder

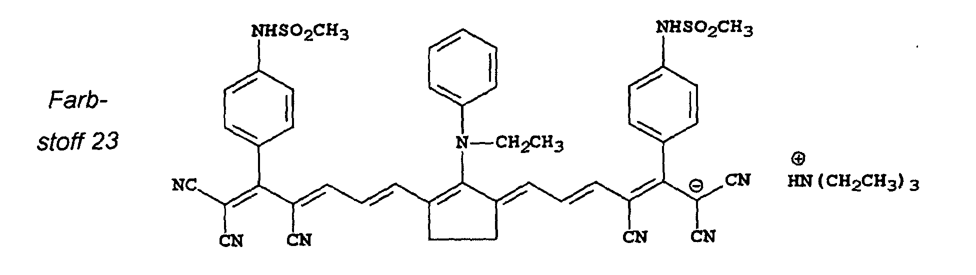

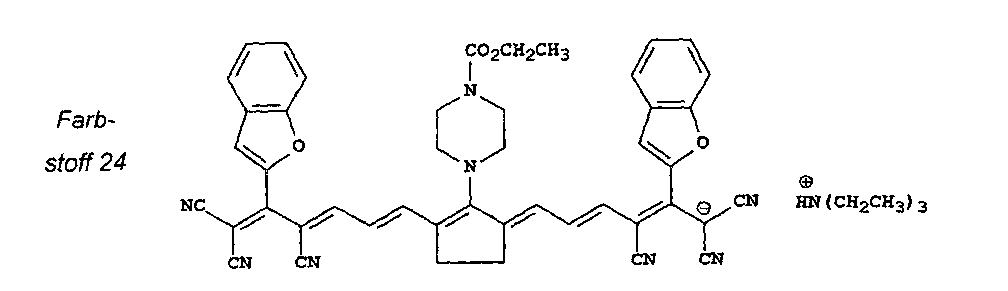

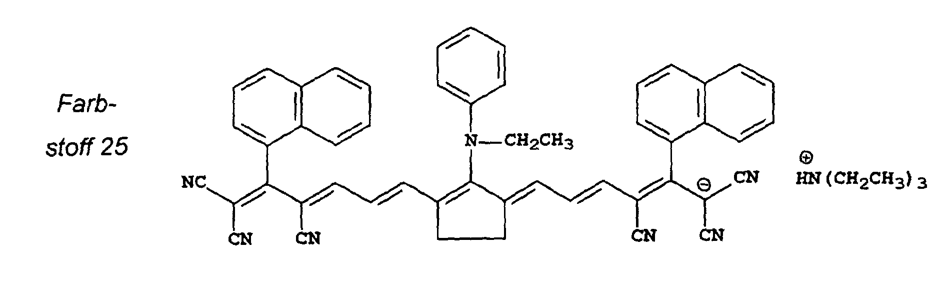

7. Verbindung nach Anspruch 1, worin unter Bezug auf die Struktur *Farbstoff* R₁ und R₂ jeweils eine Phenylgruppe darstellen und der IR-Farbstoff besteht aus:

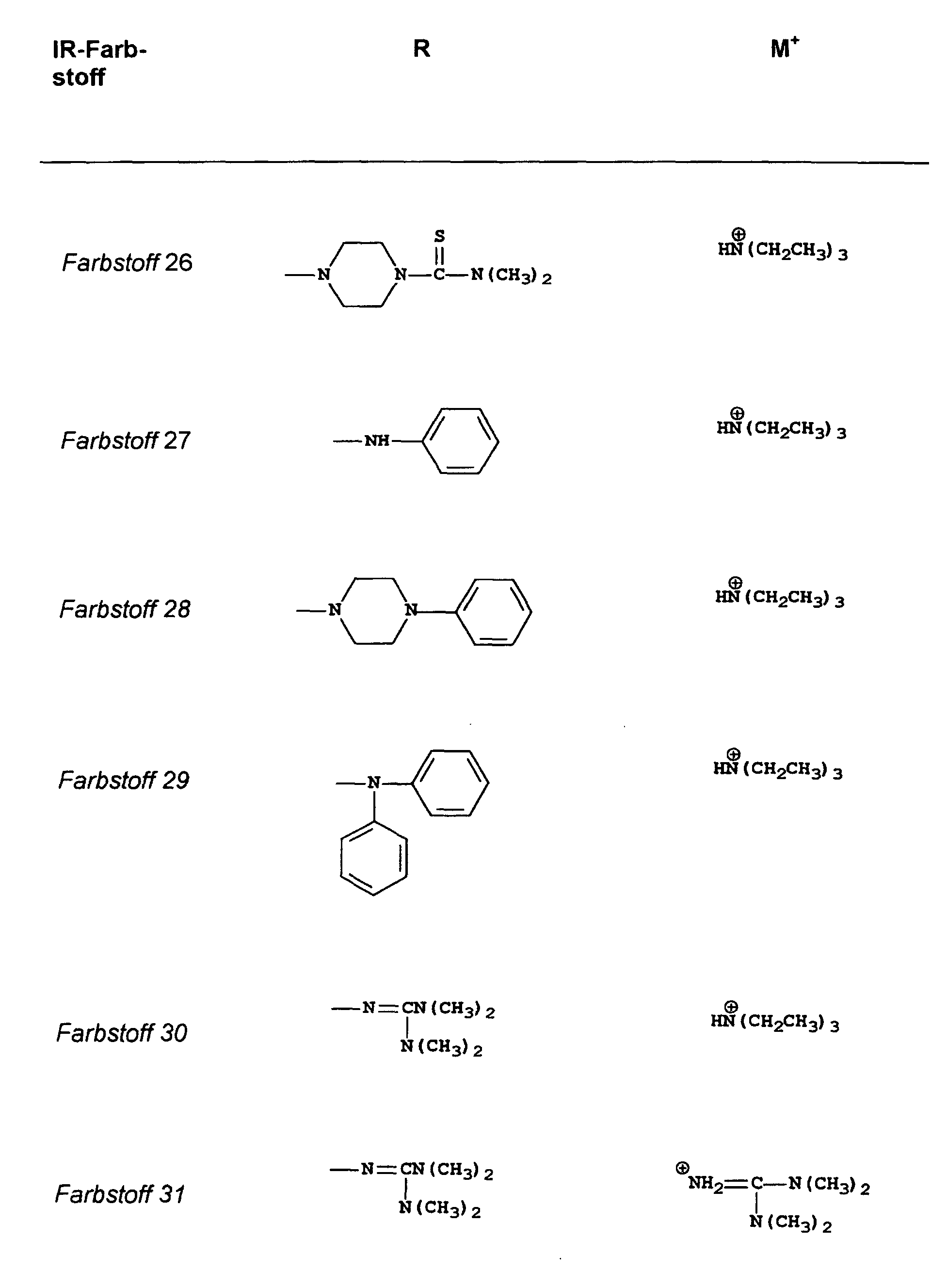

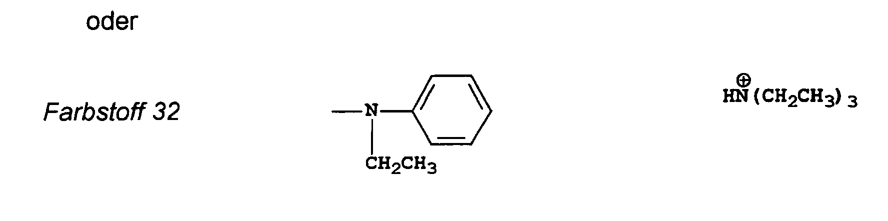

## Revendications

1. Composé absorbant le rayonnement et ayant une λₘₐₓ mesurée dans l'eau ou dans un solvant organique miscible à l'eau supérieure à 700 nm et représenté par le COLORANT de la structure suivante : 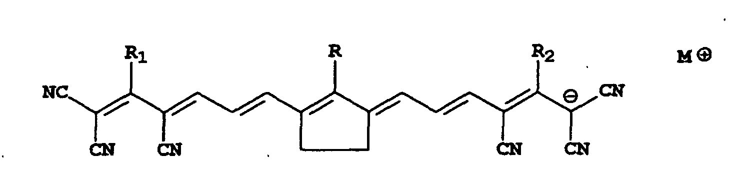 où R est une amine secondaire ou tertiaire, R₁ et R₂ sont indépendamment des groupes aromatiques hétérocycliques ou carbocycliques et M⁺ est un cation monovalent.

2. Composé selon la revendication 1 ayant une λₘₐₓ mesurée dans l'eau ou dans ledit solvant organique miscible à l'eau comprise entre 750 et 900 nm.

3. Composé selon la revendication 2 ayant une λₘₐₓ mesurée dans l'eau ou dans ledit solvant organique miscible à l'eau comprise entre 800 et 850 nm.

4. Composés selon la revendication 1, dans lesquels R est un groupe amine ayant un ou plusieurs groupes alkyle substitués ou non, aryle substitués ou non ou groupes hétérocycliques substitués ou non ou R est 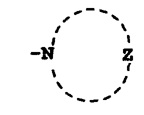 où Z représente les atomes de carbone, d'azote, d'oxygène et de soufre nécessaires pour compléter un hétérocycle de 5 à 9 membres substitué ou non et R₁ et R₂ sont le même groupe aromatique hétérocyclique ou carbocyclique.

5. Composé selon la revendication 4, dans lequel R est une amine secondaire ayant au moins un substituant phényle, ou R est 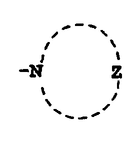 où Z représente les atomes de carbone, d'azote, de soufre et d'oxygène nécessaires pour compléter un hétérocycle de 5 à 6 membres substitué ou non et R₁ et R₂ sont le même groupe phényle ou naphtyle substitué ou non.

6. Composé selon la revendication 1 qui est 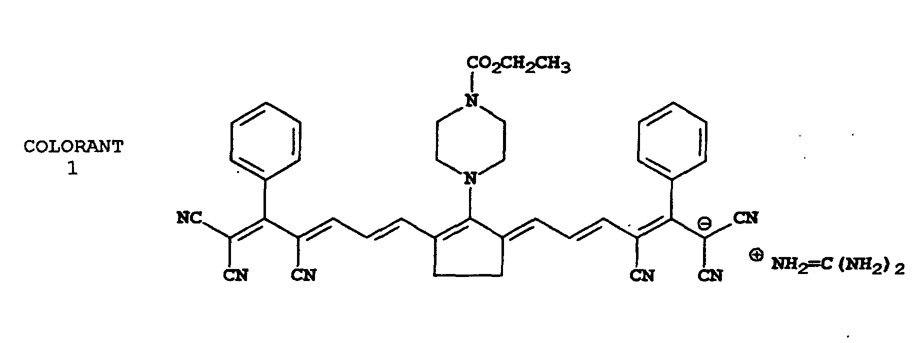 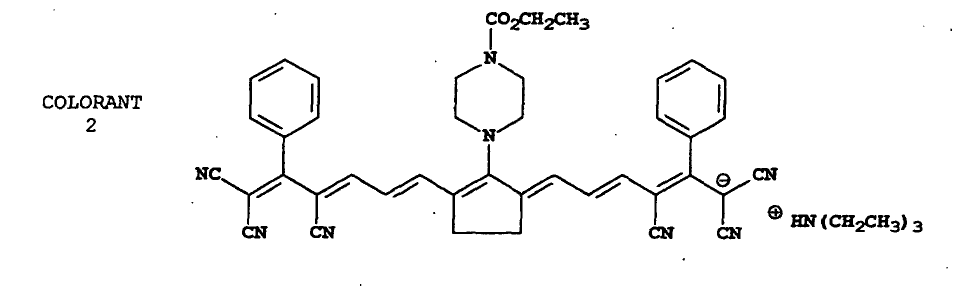 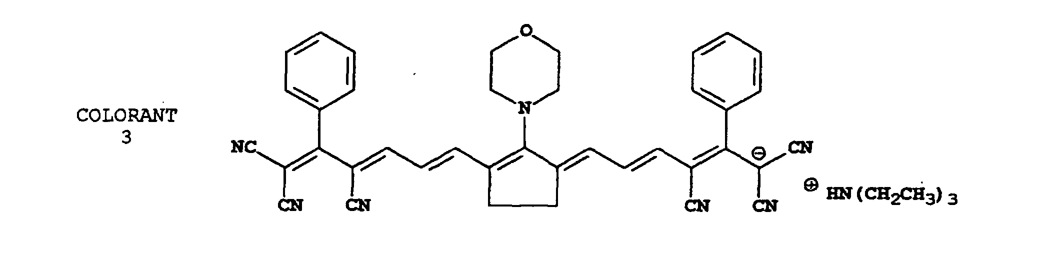 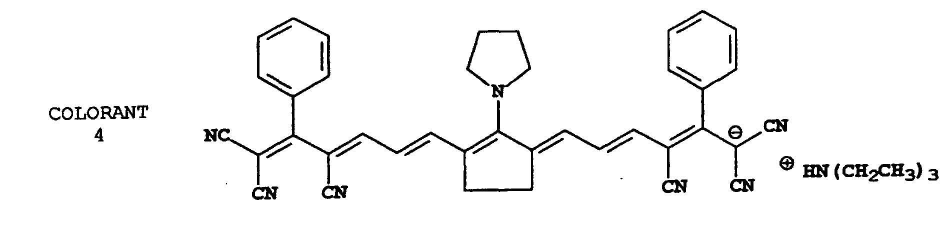 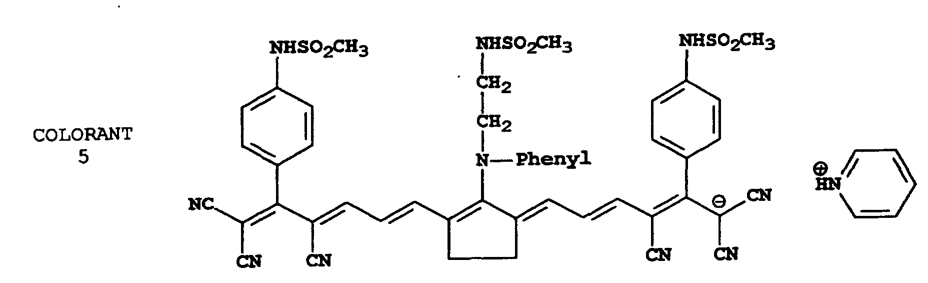 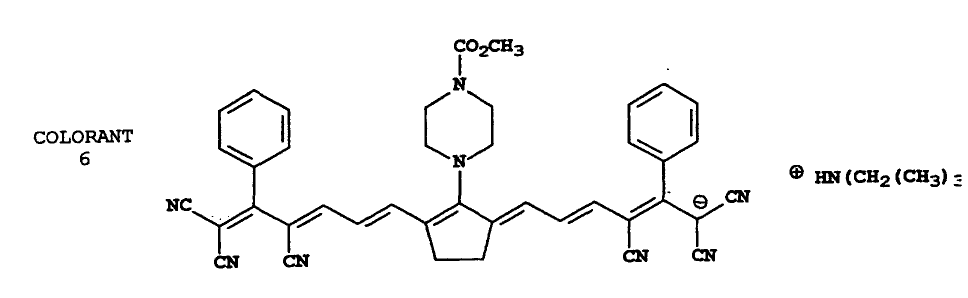 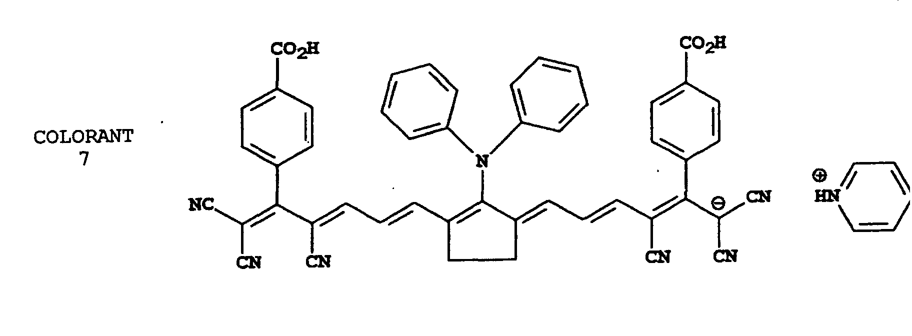 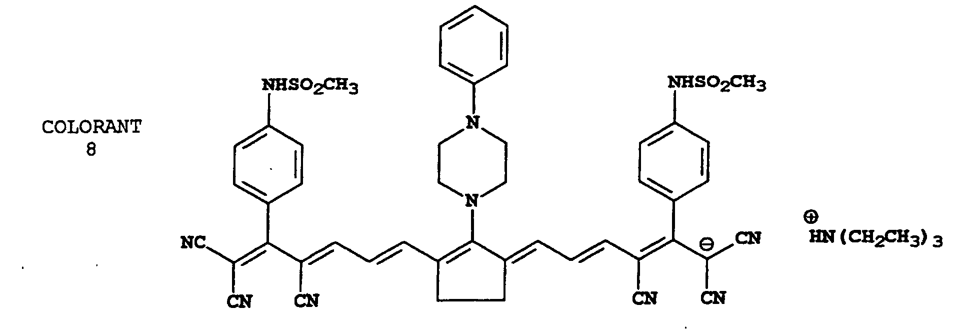 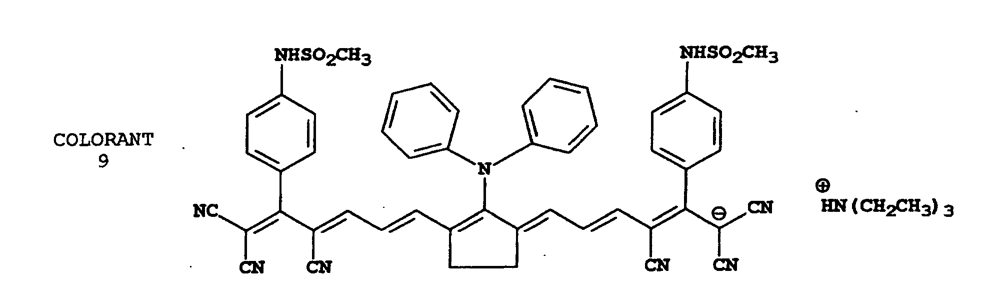 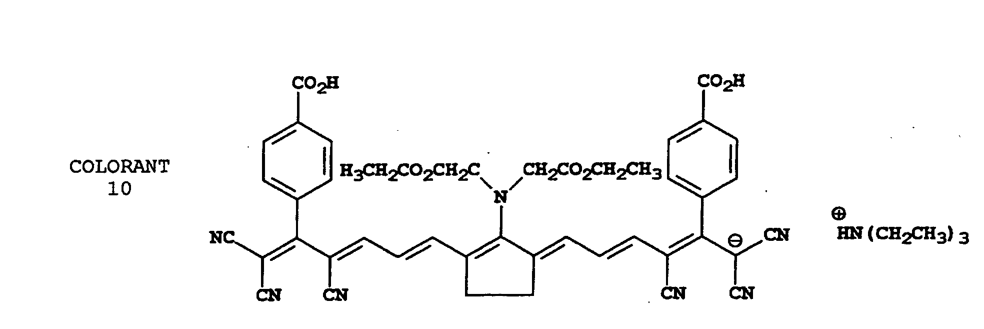 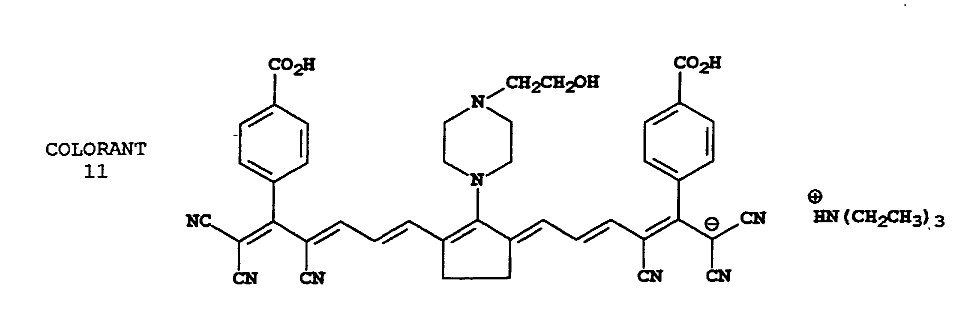 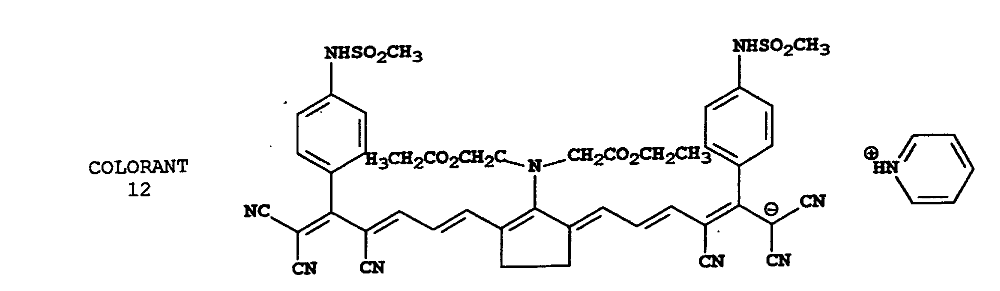 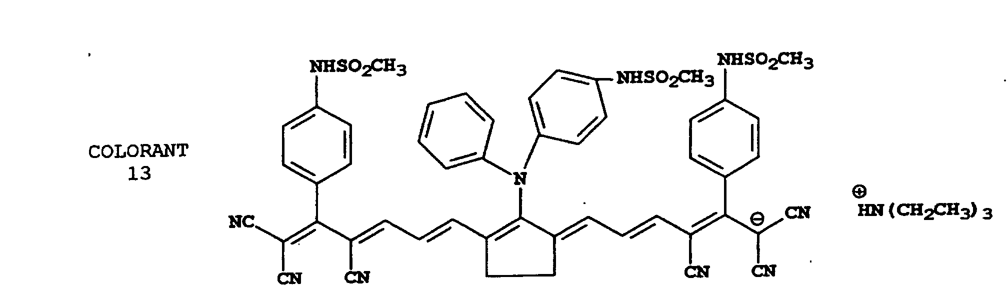 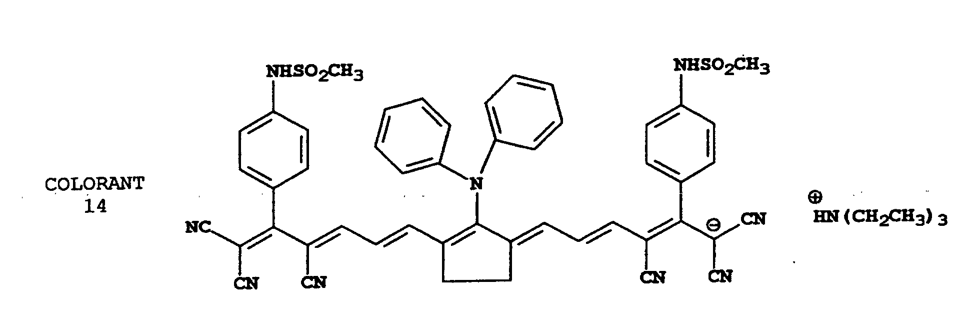 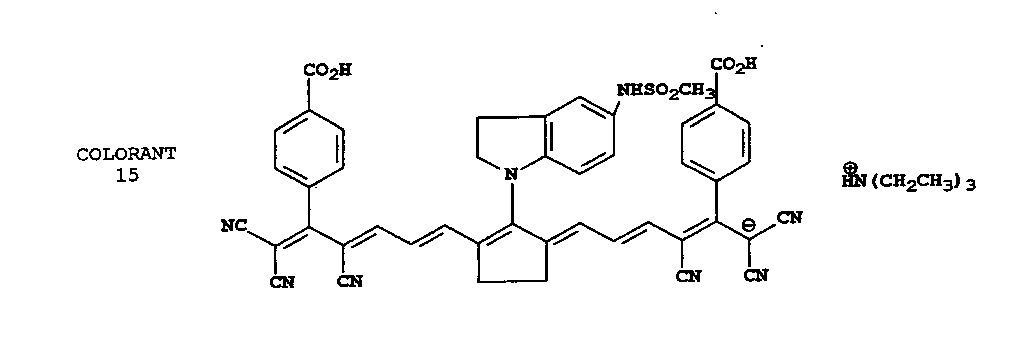 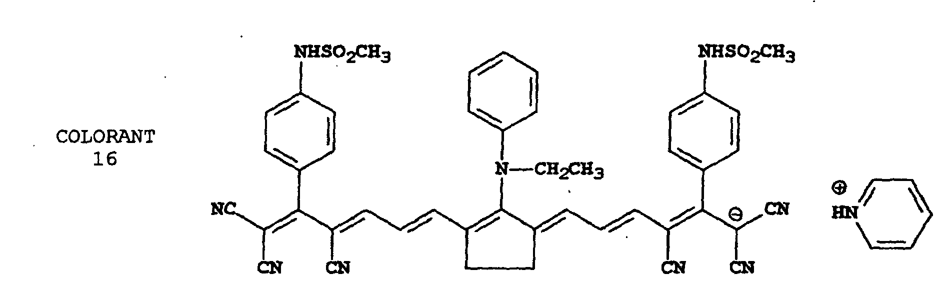 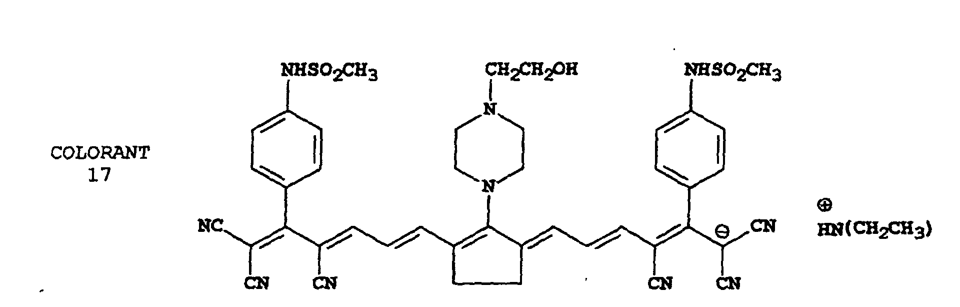 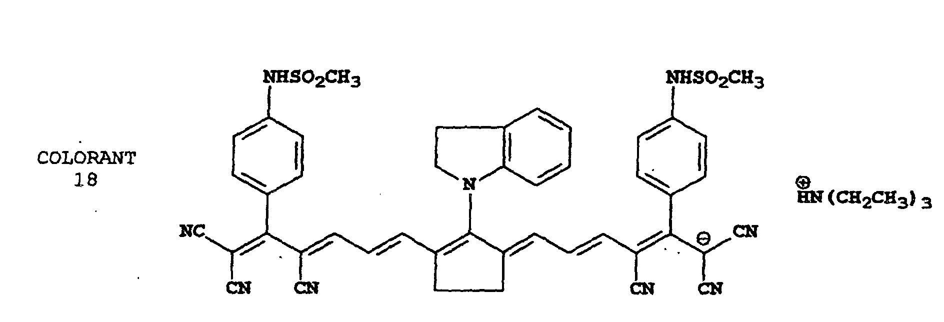 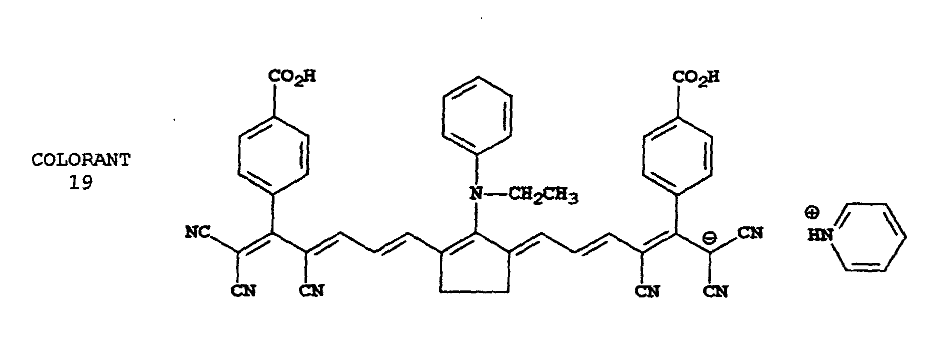 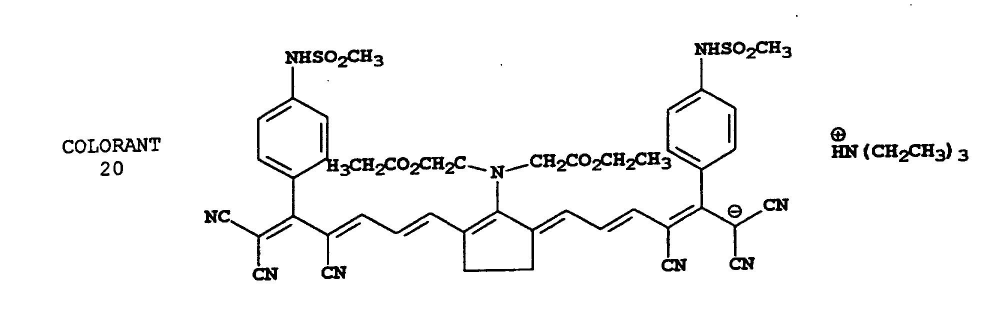 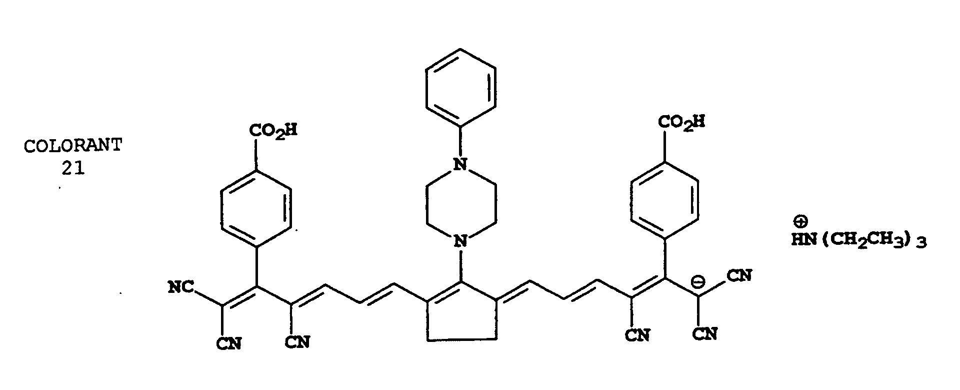 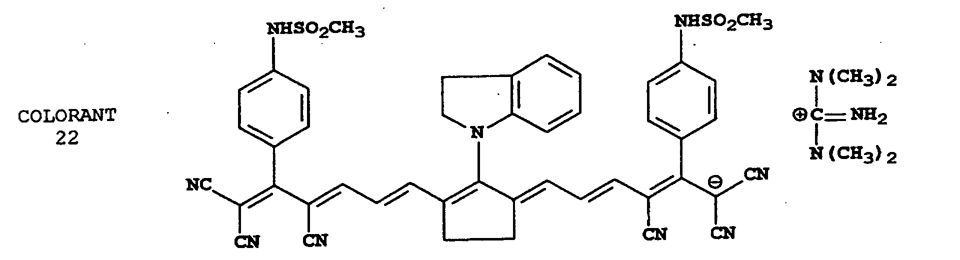 ou

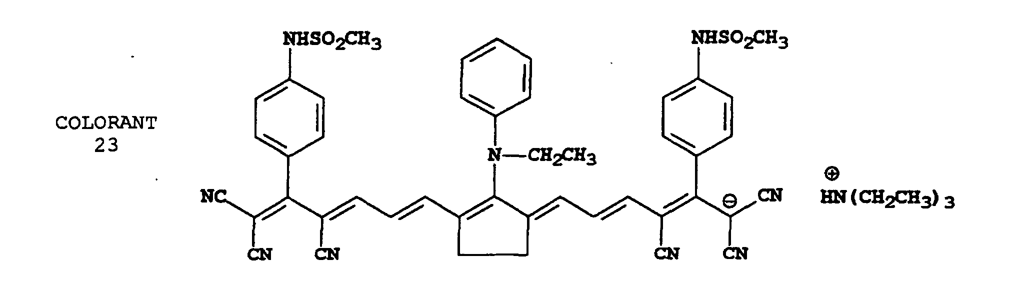

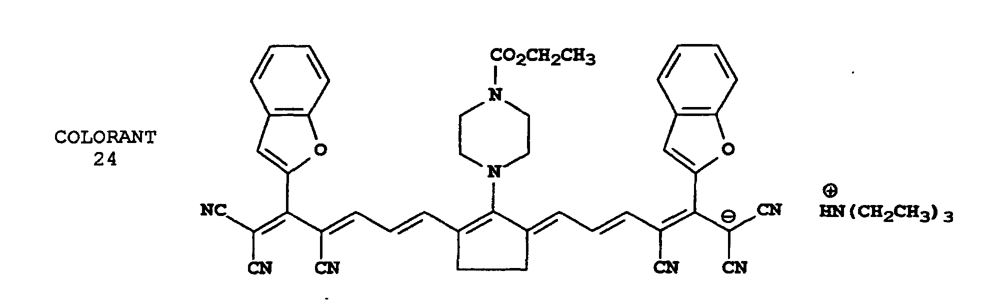

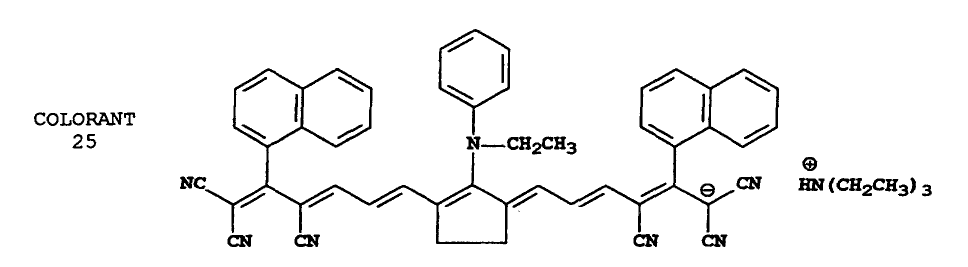

7. Composé selon la revendication 1, dans lequel en référence à la structure du COLORANT, R₁ et R₂ sont chacun un groupe phényle et le colorant IR est :
